# EUROPEAN PATENT APPLICATION

(11) **EP 4 633 214 A1**
(43) Date of publication of application: **15.10.2025**
(21) Application number: 23909662.1
(22) Date of filing: 03.11.2023
(51) Int. Cl.: H04W 8/24, H04W 4/70, H04W 8/26, H04W 76/11, H04L 61/09, H04L 61/30, H04L 61/50, G06K 17/00, G06Q 10/087, H04W 28/02, H04W 28/06

(54) **COMMUNICATION METHOD AND APPARATUS**

(30) Priority: 26.12.2022 CN 202211672114
(71) Applicant: Huawei Technologies Co., Ltd., Shenzhen, Guangdong 518129 (CN)
(72) Inventor: ZHENG, Xiaochun, Shenzhen, Guangdong 518129 (CN)
(74) Representative: Maiwald GmbH
(86) International application number: PCT/CN2023/129742
(87) International publication number: WO 2024/139729

(57) **Abstract**

A communication method and apparatus are provided. The method is: A first network element sends a first request to an access network device to request to obtain identifiers of one or more terminal devices. The first network element may receive a first identifier from a first terminal device, and obtain a second identifier of the first terminal device based on the first identifier. The first terminal device is a terminal device in the one or more terminal devices. The first identifier is an identifier that is assigned by the first network element or a second network element to the first terminal device and that corresponds to the second identifier or is an identifier that is preconfigured in the first terminal device and that corresponds to the second identifier. The second identifier is a unique identifier of the first terminal device. A length of the second identifier is greater than a length of the first identifier. The first identifier is an identifier of the first terminal device within a service scope of a sixth network element. The sixth network element is a network element providing a service for the first terminal device. According to the method, the first terminal device may perform inventory by using the shorter first identifier, thereby improving efficiency and a speed of inventory.

## Description

### CROSS-REFERENCE TO RELATED APPLICATIONS

This application claims priority to Chinese Patent Application No. 202211672114.1, filed with the China National Intellectual Property Administration on December 26, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Currently, in a passive internet of things (Passive IoT) scenario, an internet of things terminal device (for example, a radio frequency identification (radio frequency identification, RFID) apparatus) has a prospect of large-scale deployment and application. For example, in a logistics and warehousing scenario, an internet of things terminal device may inventory and track goods, and monitor an environment and a goods status in a transportation process of high-value goods (for example, vaccine). For another example, in an industrial manufacturing scenario, an internet of things terminal device may monitor an environment and a device status.

A passive internet of things terminal device has a simple function, and usually needs to rely on external excitation to send information. The excitation is generally from a reader/writer. Some passive internet of things terminal devices can collect and store weak environmental energy (such as light energy and mechanical energy) or have built-in micro batteries for operation of the terminal devices, implementing communication with readers/writers. The reader/writer may be integrated into an access network device, and the access network device operates the internet of things terminal device according to instructions of a core network element.

In a conventional technology, a method for efficiently inventorying an internet of things device is urgently needed.

### SUMMARY

This application provides a communication method and apparatus to improve efficiency of inventorying an internet of things terminal device.

According to a first aspect, an embodiment of this application provides a communication method. The method includes: A first network element sends a first request to an access network device. The first request may be used to request to obtain identifiers of one or more terminal devices. Then, the first network element may receive a first identifier from a first terminal device. The first terminal device is a terminal device in the one or more terminal devices. The first identifier is an identifier that is assigned by the first network element or a second network element to the first terminal device and that corresponds to a second identifier of the first terminal device or is an identifier that is preconfigured in the first terminal device and that corresponds to the second identifier. The second identifier is a unique identifier of the first terminal device. A length of the second identifier is greater than a length of the first identifier. The first identifier is an identifier of the first terminal device within a service scope of a sixth network element. The sixth network element is a network element providing a service for the first terminal device. The first network element obtains the second identifier of the first terminal device based on the first identifier.

According to the method, in an inventory process, the first terminal device may replace the second identifier with the shorter first identifier for access. Because the length of the first identifier is shorter than the length of the second identifier, the method can reduce overheads and duration of transmitting an identifier over an air interface, thereby improving a speed, efficiency, and a success rate of inventory, and reducing power consumption of a terminal device.

In a possible design, the first network element may obtain the second identifier of the first terminal device based on the first identifier by using the following steps: After obtaining a correspondence between the first identifier and the second identifier, the first network element may determine, based on the first identifier and the correspondence, the second identifier corresponding to the first identifier. According to this design, the first network element may accurately determine the second identifier based on the correspondence between the first identifier and the second identifier.

In a possible design, when the first network element is a tag management function network element, before the first network element sends the first request to the access network device, the first network element may further receive a second request from an application function network element. The second request is used to request to perform a target operation on the one or more terminal devices. After obtaining the second identifier of the first terminal device, the first network element may send the second identifier to the application function network element. According to this design, the first network element may perform the target operation on the one or more terminal devices based on a request of the application function network element. In a process of performing the target operation on the first terminal device, the first terminal device may perform access by using the shorter first identifier, so that overheads can be reduced, and duration of transmitting an identifier over an air interface can be reduced. In this way, the speed, efficiency, and success rate of inventory can be improved, and the power consumption of the terminal device can be reduced.

In a possible design, the first network element may obtain the locally stored correspondence between the first identifier and the second identifier, or the first network element may receive the correspondence between the first identifier and the second identifier from a third network element. This design provides a plurality of manners for obtaining the correspondence.

In a possible design, the correspondence is a correspondence between first information and the second identifier, and the first information is information determined based on the first identifier and identification information of the sixth network element. In this case, the first network element may determine, based on the first identifier, the identification information of the sixth network element, and the correspondence, the second identifier corresponding to the first identifier. According to this design, the length of the first identifier can be reduced, so that the overheads and the duration of transmitting the identifier over the air interface are further reduced, thereby improving the speed, efficiency, and success rate of inventory, and reducing the power consumption of the terminal device.

In a possible design, before the first network element sends the first request to the access network device, the first network element may further perform the following steps: The first network element sends a third request to the access network device, where the third request is used to request to obtain an identifier of at least one terminal device, and the at least one terminal device includes the first terminal device; and after receiving the second identifier from the first terminal device, the first network element assigns, to the first terminal device, the first identifier corresponding to the second identifier, and sends the first identifier to the first terminal device. According to this design, the first network element may assign, to the first terminal device, the first identifier corresponding to the second identifier.

In a possible design, before assigning, to the first terminal device, the first identifier corresponding to the second identifier, the first network element may further obtain capability information of the first terminal device, where the capability information indicates that the first terminal device has a capability of supporting the first identifier. According to this design, the first network element may obtain the capability information of the first terminal device, to assign an appropriate first identifier to the first terminal device based on the capability information.

In a possible design, the first network element may receive the capability information from the first terminal device, or the first network element may receive the capability information of the first terminal device from a fourth network element. This design provides a plurality of methods for obtaining the capability information of the first terminal device.

In a possible design, the first network element may assign, to the first terminal device, the first identifier corresponding to the second identifier by using the following steps: The first network element determines the length of the first identifier based on a preset quantity threshold of terminal devices, where the quantity threshold is a quantity threshold of terminal devices within the service scope of the sixth network element; and the first network element assigns the first identifier to the first terminal device based on the length of the first identifier. According to this design, the length of the first identifier can be reduced, so that the overheads and the duration of transmitting the identifier over the air interface are further reduced, thereby improving the speed, efficiency, and success rate of inventory, and reducing the power consumption of the terminal device.

In a possible design, after assigning, to the first terminal device, the first identifier corresponding to the second identifier, the first network element may send the correspondence between the first identifier and the second identifier to a fifth network element, and/or store the correspondence between the first identifier and the second identifier. According to this design, the first network element and/or the fifth network element can obtain the correspondence between the first identifier and the second identifier, to accurately determine the second identifier based on the first identifier in a subsequent inventory procedure.

In a possible design, before the first network element sends the third request to the access network device, the first network element may receive a fourth request from the application function network element. The fourth request is used to request to periodically obtain the identifiers of the one or more terminal devices. The third request is specifically used to request to obtain the identifiers of the one or more terminal devices in a first periodicity, and the first network element assigns an identifier within the service scope of the sixth network element to the one or more terminal devices in the first periodicity. The first request is specifically used to request to obtain the identifiers of the one or more terminal devices in a second periodicity, and the first network element receives the first identifier of the first terminal device in the one or more terminal devices in the second periodicity. According to this design, when periodically inventorying the terminal device, the first network element may assign the first identifier to the terminal device in the first periodicity, and send the first identifier to the terminal device. In the second periodicity, the terminal device may replace the second identifier of the terminal device with the shorter first identifier for access, thereby reducing overheads.

In a possible design, the third request includes a first indication. The first indication indicates the access network device to obtain an identifier of a next terminal device in the one or more terminal devices when an identifier of a terminal device in the one or more terminal devices is obtained and after a request that is from the first network element and that is used to request to obtain the identifier of the next terminal device in the one or more terminal devices is received in the first periodicity. The first request includes a second indication. The second indication indicates the access network device to obtain an identifier of a next terminal device in the one or more terminal devices after an identifier of any one of the one or more terminal devices is received. According to this design, in the second periodicity, after obtaining an identifier of a terminal device, the access network device may trigger a next terminal device to perform random access, so as to quickly inventory the terminal device.

In a possible design, if a proportion of unique identifiers in the identifiers of the one or more terminal devices received by the first network element in the second periodicity is greater than or equal to a first threshold, the first network element sends a fifth request to the access network device, the fifth request is used to request to obtain the identifiers of the one or more terminal devices in a third periodicity, and the first network element assigns the identifier within the service scope of the sixth network element to the one or more terminal devices in the third periodicity. According to this design, when the proportion of unique identifiers received by the first network element is relatively high (for example, greater than or equal to the first threshold), the first network element may assign the identifier within the service scope of the sixth network element to the terminal device in a subsequent periodicity, so that a length of the identifier sent during access of the terminal device can be reduced, thereby reducing the overheads and the duration of transmitting the identifier over the air interface, improving the speed, efficiency, and success rate of inventory, and reducing the power consumption of the terminal device.

In a possible design, the first network element may further send a third indication to the access network device, where the third indication indicates the access network device to send an excitation signal to the one or more terminal devices in first duration after each periodicity ends. The first duration may be greater than a time interval between two adjacent periodicities. For example, the two adjacent periodicities are a periodicity 1 and a periodicity 2, and the first duration is greater than a time interval between an end moment of the periodicity 1 and a start moment of the periodicity 2. In this way, the one or more terminal devices may remain powered on, so that the first identifier assigned by the first network element to the one or more terminal devices may be stored.

In a possible design, the correspondence between the first identifier and the second identifier may be preconfigured in the first network element. For example, the first network element is an AF, and the correspondence between the first identifier and the second identifier is preconfigured in the AF. According to this design, the first network element can conveniently obtain the correspondence between the first identifier and the second identifier.

In a possible design, the first network element may obtain the second identifier of the first terminal device by using the following steps: The first network element sends the first identifier to the fifth network element, and receives the second identifier determined by the fifth network element based on the first identifier. In this design, the first network element does not need to store the correspondence between the first identifier and the second identifier, and does not need to determine the second identifier based on the correspondence, so that storage space of the first network element can be saved, and a calculation amount of the first network element can be reduced. In addition, according to this design, the fifth network element may obtain the correspondence between the first identifier and the second identifier from another network element (for example, the second network element), so that a plurality of network elements can share the first identifier by using the fifth network element, to support a scenario in which a terminal device is moved within coverage areas of different network elements.

In a possible design, the first information corresponds to the second identifier, and the first information is information determined based on the first identifier and the identification information of the sixth network element. The first network element may send the first identifier and the identification information of the sixth network element to the fifth network element, and receive the second identifier determined by the fifth network element based on the first identifier and the identification information of the sixth network element. According to this design, the length of the first identifier can be further reduced, so that the overheads and the duration of transmitting the identifier over the air interface can be reduced, thereby improving the speed, efficiency, and success rate of inventory, and reducing the power consumption of the terminal device.

In a possible design, before receiving the first identifier from the first terminal device, the first network element may send a fourth indication to the first terminal device by using the access network device, where the fourth indication indicates the first terminal device to send the first identifier when the first identifier exists in the first terminal device. According to this design, the first terminal device may send the first identifier only when receiving the fourth indication. If the first terminal device has not received the fourth indication, the first terminal device does not send the first identifier. In this way, validity of information transmitted by the terminal device can be improved.

According to a second aspect, an embodiment of this application provides a communication method. The method includes: A first terminal device receives a first message from an access network device, where the first message is used to request to obtain identifiers of one or more terminal devices, and the first terminal device belongs to the one or more terminal devices. Then, the first terminal device may send a first identifier to a first network element, where the first identifier is an identifier that is assigned by the first network element or a second network element to the first terminal device and that corresponds to a second identifier of the first terminal device or is an identifier that is preconfigured in the first terminal device and that corresponds to the second identifier; the second identifier is a unique identifier of the first terminal device, and a length of the second identifier is greater than a length of the first identifier; and the first identifier is an identifier of the first terminal device within a service scope of a sixth network element, and the sixth network element is a network element providing a service for the first terminal device.

In a possible design, before the first terminal device receives the first message from the access network device, the first terminal device may further perform the following steps: The first terminal device receives a second message from the access network device, where the second message is used to request to obtain an identifier of at least one terminal device, and the at least one terminal device includes the first terminal device; the first terminal device sends the second identifier to the first network element; and the first terminal device receives the first identifier from the first network element.

In a possible design, before receiving the first identifier from the first network element, the first terminal device may further send capability information of the first terminal device to the first network element, where the capability information indicates that the first terminal device has a capability of supporting the first identifier.

In a possible design, before sending the first identifier of the first terminal device to the access network device, the first terminal device may receive a fourth indication, where the fourth indication indicates the first terminal device to send the first identifier when the first identifier exists in the first terminal device.

According to a third aspect, an embodiment of this application provides a communication method. The method includes: An access network device receives a first request from a first network element, where the first request is used to request to obtain identifiers of one or more terminal devices; and the access network device sends a first message to the one or more terminal devices, where the first message is used to obtain the identifiers of the one or more terminal devices. The access network device receives a first identifier from a first terminal device, and sends the first identifier of the first terminal device to the first network element. The first terminal device belongs to the one or more terminal devices. The first identifier is an identifier that is assigned by the first network element or a second network element to the first terminal device and that corresponds to a second identifier of the first terminal device or is an identifier that is preconfigured in the first terminal device and that corresponds to the second identifier of the first terminal device. The second identifier is a unique identifier of the first terminal device. A length of the second identifier is greater than a length of the first identifier. The first identifier is an identifier of the first terminal device within a service scope of a sixth network element. The sixth network element is a network element providing a service for the first terminal device.

In a possible design, before receiving the first request from the first network element, the access network device may perform the following steps: The access network device receives a third request from the first network element, where the third request is used to request to obtain an identifier of at least one terminal device, and the at least one terminal device includes the first terminal device; the access network device sends a second message to the at least one terminal device, where the second message is used to request to obtain the identifier of the at least one terminal device; after receiving the second identifier from the first terminal device, the access network device sends the second identifier of the first terminal device to the first network element; and after receiving the first identifier from the first network element, the access network device sends the first identifier of the first terminal device to the first terminal device.

In a possible design, when the access network device periodically obtains the identifiers of the one or more terminal devices, the access network device may further receive a third indication from the first network element, where the third indication indicates the access network device to send an excitation signal to the one or more terminal devices in first duration after each periodicity ends.

According to a fourth aspect, an embodiment of this application provides a communication apparatus, including units configured to perform the steps according to any one of the foregoing aspects.

According to a fifth aspect, an embodiment of this application provides a communication apparatus, including at least one processing element and at least one storage element. The at least one storage element is configured to store a program and data, and the at least one processing element is configured to read and execute the program and data that are stored in the storage element, so that the method according to any one of the foregoing aspects of this application is implemented.

According to a sixth aspect, an embodiment of this application provides a communication system, including a first network element configured to perform the method according to the first aspect, a first terminal device configured to perform the method according to the second aspect, and an access network device configured to perform the method according to the third aspect.

According to a seventh aspect, an embodiment of this application further provides a computer program. When the computer program runs on a computer, the computer is enabled to perform the method according to any one of the foregoing aspects.

According to an eighth aspect, an embodiment of this application further provides a computer-readable storage medium. The computer-readable storage medium stores a computer program. When the computer program is executed by a computer, the computer is enabled to perform the method according to any one of the foregoing aspects.

According to a ninth aspect, an embodiment of this application further provides a chip. The chip is configured to read a computer program stored in a memory to perform the method according to any one of the foregoing aspects.

According to a tenth aspect, an embodiment of this application further provides a chip system. The chip system includes a processor, configured to support a computer apparatus in implementing the method according to any one of the foregoing aspects. In a possible design, the chip system further includes a memory, and the memory is configured to store a program and data that are necessary for the computer apparatus. The chip system may include a chip, or may include a chip and another discrete component.

For technical effects that can be achieved in any one of the second aspect to the tenth aspect, refer to descriptions of technical effects that can be achieved in the first aspect. Details are not described herein again.

### BRIEF DESCRIPTION OF DRAWINGS

FIG. 1 is a diagram of an architecture of a communication system according to an embodiment of this application;
FIG. 2 is a diagram of an architecture of another communication system according to an embodiment of this application;
FIG. 3 is a flowchart of an inventory method according to an embodiment of this application;
FIG. 4 is a flowchart of a first communication method according to an embodiment of this application;
FIG. 5 is a flowchart of a second communication method according to an embodiment of this application;
FIG. 6 is a flowchart of a third communication method according to an embodiment of this application;
FIG. 7A is a flowchart of a fourth communication method according to an embodiment of this application;
FIG. 7B is a flowchart of a fifth communication method according to an embodiment of this application;
FIG. 8 is a flowchart of a sixth communication method according to an embodiment of this application;
FIG. 9 is a flowchart of a seventh communication method according to an embodiment of this application;
FIG. 10 is a flowchart of an eighth communication method according to an embodiment of this application;
FIG. 11 is a flowchart of a ninth communication method according to an embodiment of this application;
FIG. 12 is a flowchart of a tenth communication method according to an embodiment of this application;
FIG. 13 is a diagram of a structure of a communication apparatus according to an embodiment of this application; and
FIG. 14 is a diagram of a structure of another communication apparatus according to an embodiment of this application.

### DESCRIPTION OF EMBODIMENTS

This application provides a communication method and apparatus to improve efficiency of inventorying an internet of things terminal device. The method and the apparatus are based on a same technical concept. Because problem-resolving principles of the method and the apparatus are similar, mutual reference may be made to implementations of the method and the apparatus. Repeated content is not described again.

In the following, some terms in this application are described to help a person skilled in the art have a better understanding.
(1) Inventory operation: The inventory operation may also be referred to as a counting operation. The operation may obtain an identifier (for example, a product code (product code, PC) or an electronic product code (electronic product code, EPC)) of a terminal device. When the inventory operation needs to be performed on a plurality of terminal devices, an application function network element or a core network device may obtain identifiers of the plurality of terminal devices one by one or in batches by using an access network device.
(2) Read (Read) operation: The read operation may read information of a terminal device, for example, read content stored in a storage area of the terminal device and data collected by a sensor.
(3) Write (Write) operation: The write operation may be performing a write operation on a storage area of a terminal device. For example, identification information (for example, an EPC) in the storage area may be written or rewritten.

In embodiments of this application, unless otherwise specified, a quantity of a noun indicates "a singular noun or a plural noun", that is, "one or more". "At least one" means one or more, and "a plurality of" means two or more. The term "and/or" describes an association relationship between associated objects and indicates that three relationships may exist. For example, A and/or B may indicate the following three cases: Only A exists, both A and B exist, and only B exists. "At least one item (piece) of the following" or a similar expression thereof means any combination of these items (pieces), including a singular item (piece) or any combination of plural items (pieces).

In addition, it should be understood that, in the descriptions of this application, terms such as "first" and "second" are merely used for distinguishing and description, but should not be understood as an indication or implication of relative importance, or should not be understood as an indication or implication of a sequence.

The following describes in detail embodiments of this application with reference to the accompanying drawings.

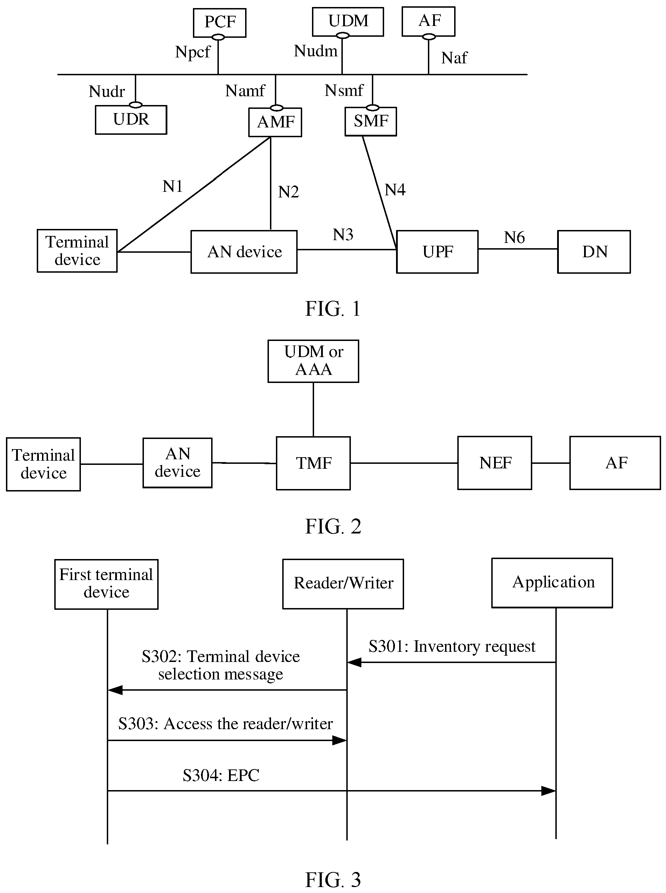

FIG. 1 is a diagram of an architecture of a communication system according to an embodiment of this application, and shows a 5^{th} generation (the 5^{th} generation, 5G) network architecture based on a service-oriented architecture. The 5G network architecture shown in FIG. 1 may include a terminal device, an access network (access network, AN) device, and a core network (core network, CN) device. The terminal device accesses a data network (data network, DN) by using the access network device and the core network device. The following describes the components of the communication system.

In this application, the terminal device may also be referred to as a tag, user equipment (user equipment, UE), a terminal, an access terminal, a subscriber unit, a subscriber station, a mobile station, a remote station, a remote terminal, a mobile device, a user terminal, a wireless communication device, a user agent, a user apparatus, a target terminal, or the like. The terminal device in this application may be a passive terminal device, a semi-passive terminal device, or an active terminal device. Used wireless communication technologies include but are not limited to RFID, Bluetooth, Zigbee (Zigbee), and the like, and a wireless communication technology defined for the internet of things in the future.

The terminal device may be widely used in various scenarios, for example, internet of things (internet of things, IOT), device-to-device (device-to-device, D2D), vehicle to everything (vehicle to everything, V2X) communication, machine-type communication (machine-type communication, MTC), virtual reality, augmented reality, industrial control, autonomous driving, telemedicine, smart grid, smart furniture, smart office, smart wearable, smart transportation, and smart city.

In this application, an apparatus configured to implement a function of a terminal device may be a terminal device, or may be an apparatus, for example, a chip system, that can support the terminal device in implementing the function, and the apparatus may be installed in the terminal device. In this application, the chip system may include a chip, or may include a chip and another discrete component. In the technical solutions provided in this application, an example in which the apparatus configured to implement a function of a tag is a terminal device is used to describe the technical solutions provided in embodiments of this application.

The access network device is a device providing a wireless communication function for the terminal device. For example, the access network device includes but is not limited to a next generation NodeB (gNodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmission point (transmitting and receiving point, TRP), a transmitting point (transmitting point, TP), a mobile switching center, and the like.

In some deployments, the gNB may include a central unit (central unit, CU) and the distributed unit (distributed unit, DU). The gNB may further include an active antenna unit (active antenna unit, AAU). The CU can implement some functions of the gNB, and the DU can implement other functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a medium access control (media access control, MAC) layer, and a physical (physical, PHY) layer. The AAU implements some physical layer processing functions, radio frequency processing, and a function related to an active antenna. Information at the RRC layer is generated by the CU, and is finally encapsulated at the PHY layer of the DU into the information at the PHY layer, or is transformed from the information at the PHY layer. Therefore, in this architecture, higher layer signaling, for example, RRC layer signaling, may also be considered to be sent by the DU, or sent by the DU and the AAU. It may be understood that the access network device may include one or more of a CU node, a DU node, or an AAU node. In addition, the CU may be classified as an access network device in an access network, or the CU may be classified as an access network device in a CN. This is not limited in this application.

The access network device and the terminal device may be located in fixed locations, or may be movable. The access network device and the terminal device may be deployed terrestrially, including indoors or outdoors, or may be handheld or vehicle-mounted; or may be deployed on a water surface; or may be deployed on a plane, a balloon, or an artificial satellite in the sky. Application scenarios of the access network device and the terminal device are not limited in embodiments of this application.

The core network device includes some or all of the following network elements: a unified data management (unified data management, UDM) network element, a unified data repository (unified data repository, UDR) network element, a network exposure function (network exposure function, NEF) network element (not shown in the figure), an application function (application function, AF) network element, a policy control function (policy control function, PCF) network element, an access and mobility management function (access and mobility management function, AMF) network element, a session management function (session management function, SMF) network element, a user plane function (user plane function, UPF) network element, and a network repository function (network repository function, NRF) network element (not shown in the figure).

In this application, the mobility management network element is responsible for access control and mobility management of the terminal device, for example, including functions such as mobility status management, temporary user identity allocation, and user authentication and authorization. In 5G, the mobility management network element may be the AMF network element. In future communication such as 6^{th} generation (the 6^{th} generation, 6G), the mobility management network element may still be the AMF network element, or may have another name. This is not limited in this application.

In this application, the session management network element is responsible for managing a protocol data unit (protocol data unit, PDU) session of the terminal device. The PDU session is a channel used to transmit a PDU, and the terminal device and the DN need to transmit the PDU to each other through the PDU session. The SMF network element is responsible for establishment, maintenance, deletion, and the like of the PDU session. The session management network element includes session-related functions such as session management (for example, session establishment, modification, and release, including maintenance of a tunnel between a user plane network element and the access network device), selection and control of the user plane network element, service and session continuity (Service and Session Continuity, SSC) mode selection, and roaming. In 5G, the session management network element may be the SMF network element. In future communication such as 6G, the session management network element may still be the SMF network element, or may have another name. This is not limited in this application.

In this application, the user plane network element is a gateway for communication between a mobile network and a DN. The UPF network element includes user plane-related functions such as packet routing and transmission, packet detection, service usage reporting, quality of service (Quality of Service, QoS) processing, lawful interception, uplink packet detection, and downlink data packet storage. In 5G, the user plane network element may be the UPF network element. In future communication such as 6G, the user plane network element may still be the UPF network element, or may have another name. This is not limited in this application.

In this application, the data management network element is responsible for storing information such as a subscription permanent identifier (subscription permanent identifier, SUPI), a credential (credential), a security context (security context), and subscription data of a subscriber. The information stored in the data management network element may be used for authentication and authorization for accessing the mobile network by the terminal device. The foregoing subscriber may be specifically a user using a service provided by the mobile network, for example, a user using a SIM card of China Telecom or a user using a SIM card of China Mobile. The subscription permanent identifier (Subscription Permanent Identifier, SUPI) of the subscriber may be a number of the SIM card or the like. The credential and the security context of the subscriber may be stored small files such as an encryption key of the SIM card or information related to encryption of the SIM card, and are used for authentication and/or authorization. The security context may be data (cookie), a token (token), or the like stored in a local terminal (for example, a mobile phone) of the user. The subscription data of the subscriber may be a supporting service of the SIM card, for example, a traffic package or a used network of the SIM card. It should be noted that the permanent identifier, the credential, the security context, the authentication data (cookie), and the token are equivalent to information related to authentication and authorization, and are not distinguished or limited in this application document for ease of description. Unless otherwise specified, the security context is used as an example for description in embodiments of this application. However, embodiments of this application are also applicable to authentication and/or authorization information described in another manner. In 5G, the data management network element may be the UDM network element. In future communication such as 6G, the data management network element may still be the UDM network element, or may have another name. This is not limited in this application.

In this application, the unified data repository network element is responsible for performing a function of accessing data of a type such as subscription data, policy data, and application data. In 5G, the unified data repository network element may be the UDR network element. In future communication such as 6G, the unified data repository network element may still be the UDR network element, or may have another name. This is not limited in this application.

In this application, the network exposure network element exposes an external interface of a mobile network to a third party in a secure manner. When the session management network element needs to communicate with a third-party network element, the network exposure network element may serve as a relay for communication between the session management network element and the third-party network element. When the network exposure network element serves as the relay, the network exposure network element may translate identification information of a subscriber and identification information of the third-party network element. For example, when sending an SUPI of the subscriber from the mobile network to the third party, the network exposure network element may translate the SUPI into an external identity (identity, ID) corresponding to the SUPI. On the contrary, when sending the external ID (a network element ID of the third party) to the mobile network, the network exposure network element may translate the external ID into the SUPI. In 5G, the network exposure network element may be the NEF network element. In future communication such as 6G, the network exposure network element may still be the NEF network element, or may have another name. This is not limited in this application.

In this application, the application function network element is configured to transfer a requirement of an application side for a network side, for example, a QoS requirement or a user status event subscription. The application function network element may be a third-party functional entity, or may be an application server deployed by an operator. In 5G, the application function network element may be the AF network element. In future communication such as 6G, the application function network element may still be the AF network element, or may have another name. This is not limited in this application.

In this application, the policy control network element is configured to provide a policy of a PDU session for the session management network element. The policy may include a charging-related policy, a QoS-related policy, an authorization-related policy, and the like. In 5G, the policy control network element may be the PCF network element. In future communication such as 6G, the policy control network element may still be the PCF network element, or may have another name. This is not limited in this application.

In this application, the network repository function network element may be configured to: provide a network element discovery function, and provide, based on a request of another network element, network element information corresponding to a network element type. The network repository function network element further provides a network element management service, for example, network element registration, update, and de-registration, and network element status subscription and push. In 5G, the network repository function network element may be the NRF network element. In future communication such as 6G, the network repository function network element may still be the NRF network element, or may have another name. This is not limited in this application.

The DN is a network located outside a mobile network. The mobile network may access a plurality of DNs, and a plurality of services may be deployed on the DN, to provide services such as data and/or a voice for the terminal device. For example, the DN is a private network of a smart factory, a sensor installed in a workshop of the smart factory may be a terminal device, a control server of the sensor is deployed in the DN, and the control server may serve the sensor. The sensor may communicate with the control server to obtain instructions of the control server, transmit collected sensor data to the control server according to the instructions, and the like. For another example, the DN is an internal office network of a company, a mobile phone or a computer of an employee of the company may be a terminal device, and the mobile phone or the computer of the employee may access information, data resources, and the like in the internal office network of the company.

In FIG. 1, Npcf, Nudr, Nudm, Naf, Namf, and Nsmf are respectively service-oriented interfaces provided by the PCF, the UDR, the UDM, the AF, the AMF and the SMF, and are configured to invoke corresponding service-oriented operations. An N1 interface is an interface between the AMF and the terminal device, and may be configured to transfer NAS signaling (for example, including a QoS rule from the AMF) and the like to the terminal device. An N2 interface is an interface between the AMF and the RAN, and may be configured to transfer radio bearer control information and the like from a core network side to the RAN. An N3 interface is an interface between the RAN and the UPF, and is mainly configured to transfer uplink/downlink user plane data between the RAN and the UPF. An N4 interface is an interface between the SMF and the UPF, and may be configured to transfer information between a control plane and a user plane, including delivery of a forwarding rule, a QoS control rule, a traffic statistics rule, and the like from the control plane to the user plane, and reporting of user plane information. An N6 interface is an interface between the UPF and DN, and is configured to transfer uplink/downlink user data flow between the UPF and the DN.

FIG. 2 is a diagram of an architecture of another communication system to which an embodiment of this application is applicable. As shown in FIG. 2, the communication system may include a terminal device, an AN device, a tag management function (TAG Management Function, TMF) network element, a UDM or an authentication, authorization and accounting (authentication authorization accounting, AAA) server, an NEF, and an AF. For specific content of the terminal device, the AN device, the UDM, the NEF, and the AF, refer to the descriptions of FIG. 1. Repeated content is not described again.

The TMF can support a tag management function, and the function supports various tag management operations.

The TMF may directly communicate with the AF, or communicate with the AF through the NEF network element. After receiving an operation request from the AF, the TMF may perform an operation on a tag by using the AN device.

The TMF may communicate with the UDM or the AAA server. For example, the TMF may obtain information stored in the UDM or the AAA server.

The AAA server may be configured to: process a user access request, provide authentication, authorization, and accounting services, manage a user access network server, and provide a service for a user having an access permission.

In addition, the TMF may be used as an independent network element, or may be disposed together with another network element. For example, the TMF may be disposed together with the NEF, or may be disposed together with the AMF. In this way, the NEF or the AMF can implement a function of the TMF. In addition, TMF is only an example name. All devices that can implement functions corresponding to the TMF in this application may be understood as the TMF described in this application.

It may be understood that the foregoing network elements or functions may be network elements in a hardware device, or may be software functions that are run on dedicated hardware, or may be instantiated virtualization functions on a platform (for example, a cloud platform). In a possible implementation, the foregoing network elements or functions may be implemented by one device, or may be jointly implemented by a plurality of devices, or may be implemented by one functional module in one device. This is not specifically limited in embodiments of this application.

It should be noted that the communication system shown in FIG. 1 or FIG. 2 does not constitute a limitation on the communication system to which embodiments of this application are applicable. Therefore, a communication method provided in embodiments of this application may be further applicable to communication systems of various standards, for example, a long term evolution (long term evolution, LTE) communication system, a 5G communication system, a 6G communication system, a future communication system, vehicle to everything (vehicle to everything, V2X), a long term evolution-internet of vehicles (LTE-vehicle, LTE-V), vehicle to vehicle (vehicle to vehicle, V2V), an internet of vehicles, machine-type communication (Machine Type Communication, MTC), IoT, a long term evolution-machine to machine (LTE-machine to machine, LTE-M), machine to machine (machine to machine, M2M), an internet of things, and the like. In addition, it should be further noted that names of the network elements in the communication system are not limited in embodiments of this application either. For example, in communication systems of different standards, network elements may have other names. For another example, when the plurality of network elements are integrated into a same physical device, the physical device may alternatively have another name.

For ease of understanding this application, the following describes related technologies.

FIG. 3 is a flowchart of an inventory method. The following describes the method with reference to FIG. 3.

S301: An application (APP) sends an inventory request to a reader/writer, where the inventory request is used to request to perform an inventory operation on one or more terminal devices to obtain EPCs of the one or more terminal devices.

S302: The reader/writer broadcasts a terminal device selection message, where the terminal device selection message is used to request to obtain one or more EPCs.

S303: A first terminal device accesses the reader/writer.

The first terminal device may be a terminal device that is in the one or more terminal devices and that is successfully connected to the reader/writer.

S304: The first terminal device sends an EPC of the first terminal device to the APP by using the reader/writer.

Currently, a length of the EPC is relatively long. For example, the length of the EPC may be 96 bits (bit), 128 bits, or 496 bits. When inventory is performed by using this method, inventory efficiency is relatively low, and a success rate is also relatively low.

In addition, in this method, the EPC is transmitted in plaintext, so that the EPC may be obtained by a third party, thereby reducing EPC transmission security.

The following describes the solutions provided in this application with reference to the accompanying drawings.

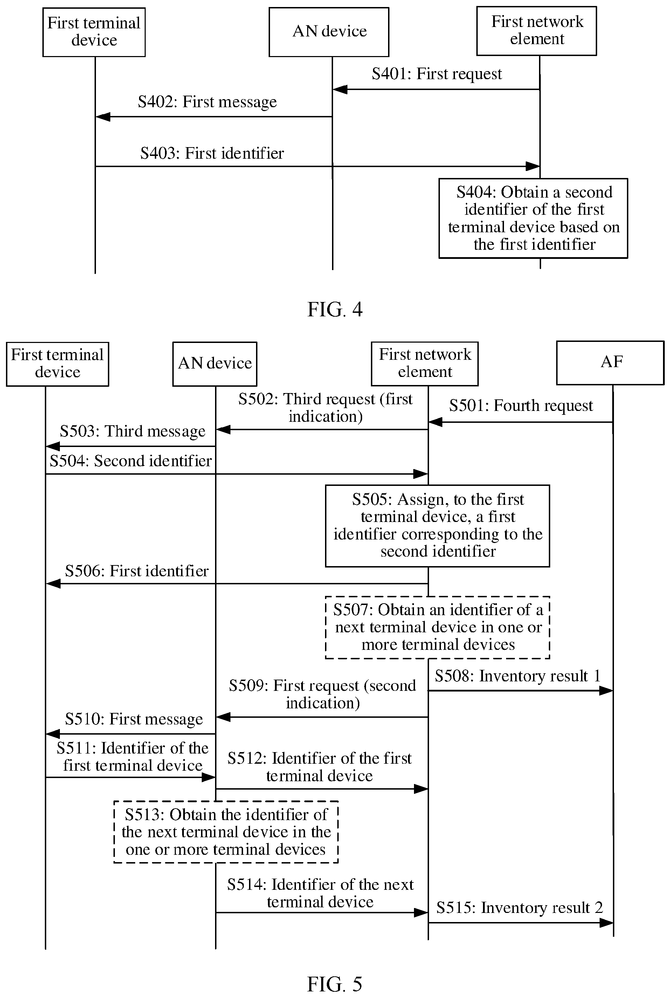

An embodiment of this application provides a communication method. The method may be applied to the communication system shown in FIG. 1 or FIG. 2. The following describes a procedure of the method in detail with reference to a flowchart shown in FIG. 4.

S401: A first network element sends a first request to an access network device, where the first request may be used to request to obtain identifiers of one or more terminal devices.

Correspondingly, the access network device receives the first request from the first network element.

The first network element may be a TMF or an AF. The one or more terminal devices may be terminal devices such as a passive tag, a semi-passive tag, and an active tag.

When the first network element is the TMF, the TMF may send the first request to the access network device after receiving a second request from the AF. The second request is used to request to perform a target operation on the one or more terminal devices. The second request includes identification information of the AF, or the second request includes information having a correspondence with identification information of the AF. For example, the information having a correspondence with the identification information of the AF includes an internet protocol (internet protocol, IP) address of the AF. The first request may be an existing message (for example, an inventory command), or may be a new message. The target operation may include but is not limited to at least one of the following: an inventory operation, a read operation, a write operation, and the like. For example, when the target operation is a read operation, the second request may be a read request. For another example, when the target operation is a write operation, the second request may be a write request.

When the first network element is an AF, the first request may be an existing message (for example, an inventory command), or may be a new message.

S402: The access network device sends a first message to the one or more terminal devices, where the first message is used to obtain the identifiers of the one or more terminal devices.

Correspondingly, the one or more terminal devices receive the first message from the access network device.

Optionally, the access network device sends the first message to the one or more terminal devices in a unicast or broadcast manner.

The first message may be an existing message (for example, a terminal device selection message), or may be a new message.

S403: The first terminal device sends a first identifier to the first network element. Correspondingly, the first network element receives the first identifier from the first terminal device.

The first terminal device is a terminal device in the one or more terminal devices. Each of the one or more terminal devices may perform an operation in a manner similar to that of the first terminal device. The following uses the first terminal device as an example for description.

Optionally, the first terminal device may initiate a random access procedure to the access network device, and after accessing the access network device, send the first identifier to the first network element by using the access network device. The first identifier may be carried in an existing message (for example, a registration request), or may be carried in a new message. Specific content of the random access procedure is not limited in this application.

The first identifier is an identifier corresponding to a second identifier of the first terminal device. A length of the second identifier is greater than a length of the first identifier. The second identifier is a unique identifier of the first terminal device. The unique identifier may be a globally unique identifier, or may be a unique identifier of the first terminal device in an operator providing a service for the first terminal device, or may be a unique identifier customized by a user. For example, the second identifier is an EPC or an international mobile subscriber identity (international mobile subscriber identity, IMSI) of the first terminal device. The first identifier is an identifier that is assigned by the first network element or a second network element to the first terminal device and that corresponds to the second identifier of the first terminal device, or the first identifier is an identifier that is preconfigured in the first terminal device and that corresponds to the second identifier. The first identifier is an identifier of the first terminal device within a service scope of a sixth network element, in other words, the first identifier may uniquely indicate the first terminal device within the service scope of the sixth network element. The sixth network element is a network element providing a service for the first terminal device. For example, the sixth network element may be an AF, a TMF, a UDM, or an AAA server.

The first terminal device may obtain the first identifier in one of the following implementations.

Implementation 1: When the first identifier is an identifier that is assigned by the first network element or the second network element to the first terminal device and that corresponds to the second identifier of the first terminal device, the first terminal device may obtain the locally stored first identifier from the first network element or the second network element. The second network element may be a TMF different from the first network element.

In the implementation 1, before S403, the first terminal device may obtain the first identifier from the first network element or the second network element. By using steps A1 to A5, the following uses an example in which the first terminal device obtains the first identifier from the first network element for description. When the first terminal device obtains the first identifier from the second network element, the second network element may perform a same operation as the first network element.

A1: The first network element sends a third request to the access network device, where the third request may be used to request to obtain an identifier of at least one terminal device, and the at least one terminal device includes the first terminal device.

For specific content of step A1, refer to S401, but except that the first request is replaced with the third request, and the one or more terminal devices are replaced with the at least one terminal device. Details are not described herein again.

A2: The access network device sends a third message to the at least one terminal device, where the third message is used to obtain the identifier of the at least one terminal device.

The access network device may send the third message to the at least one terminal device in a unicast or broadcast manner.

For specific content of step A2, refer to S402, but except that the first message is replaced with the third message, and the one or more terminal devices are replaced with the at least one terminal device. Details are not described herein again.

A3: The first terminal device sends the second identifier of the first terminal device to the first network element.

The first terminal device may initiate a random access procedure based on the third message, and after accessing the access network device, send the second identifier to the first network element by using the access network device. The second identifier may be carried in an existing message (for example, a registration request), or may be carried in a new message.

A4: The first network element assigns, to the first terminal device, the first identifier corresponding to the second identifier.

Optionally, the first network element may assign, to the first terminal device based on capability information of the first terminal device, the first identifier corresponding to the second identifier. The capability information may indicate that the first terminal device has a capability of supporting the first identifier.

The first network element may obtain the capability information of the first terminal device in one of the following manners:
Manner 1: The first terminal device sends the capability information of the first terminal device to the first network element. Correspondingly, the first network element receives the capability information from the first terminal device.

The first terminal device may initiate the random access procedure based on the third message, and after accessing the access network device, send the capability information of the first terminal device to the first network element by using the access network device. The capability information may be carried in an existing message (for example, a registration request), or may be carried in a new message.

In addition, the capability information and the second identifier may be carried in a same message, or may be carried in different messages.

Manner 2: A fourth network element sends the capability information of the first terminal device to the first network element. Correspondingly, the first network element receives the capability information from the fourth network element.

The fourth network element may be a UDM or an AAA server. After step A3, the first network element may send, to the UDM or the AAA server, a request used to request to obtain the capability information of the first terminal device, where the request may carry the second identifier of the first terminal device. Then, the UDM or the AAA server may send the capability information of the first terminal device to the first network element.

Optionally, the capability information of the first terminal device may indicate at least one of the following: whether the first terminal device supports the first identifier, a maximum length of the first identifier that can be supported by the first terminal device, whether the first terminal device supports update of the first identifier, and the like.

When the capability information indicates that the first terminal device supports the first identifier, the first network element may assign the first identifier to the first terminal device. When the capability information indicates that the first terminal device does not support the first identifier, the first network element does not assign the first identifier to the first terminal device.

When the capability information indicates that the maximum length of the first identifier that can be supported by the first terminal device is m bits, where m is a positive integer, the length of the first identifier assigned by the first network element to the first terminal device is less than or equal to m bits. If the length of the to-be-assigned first identifier is greater than the maximum length of the first identifier that can be supported by the device, the first network element does not assign the first identifier to the first terminal device.

When the capability information indicates that the first terminal device supports update of the first identifier, the first network element may assign an updated first identifier to the first terminal device as required. When the capability information indicates that the first terminal device does not support update of the first identifier, the first network element does not assign the updated first identifier to the first terminal device.

Optionally, the first network element determines the length of the first identifier based on a preset quantity threshold of terminal devices, and assigns the first identifier to the first terminal device based on the length of the first identifier. The quantity threshold may be a quantity threshold of terminal devices within the service scope of the sixth network element, and the quantity threshold is greater than or equal to a quantity of terminal devices actually inventoried. For example, when the preset quantity threshold of terminal devices is 40, the first network element may determine that the length of the first identifier is 6 bits, and assign the first identifier with the length of 6 bits to the first terminal device. According to the method, the length of the first identifier can be reduced.

Optionally, a correspondence between the first identifier and the second identifier may include at least one of the following:
1. The first identifier corresponds to the second identifier. The first identifier may be a unique identifier of the first terminal device. For example (which is referred to as an example 1 below), the at least one terminal device includes a terminal device 1 to a terminal device 4. Second identifiers (for example, EPCs) of the terminal device 1 to the terminal device 4 are respectively a second identifier 1, a second identifier 2, a second identifier 3, and a second identifier 4. The first identifiers assigned by the first network element to the terminal device 1 to the terminal device 4 are respectively 00, 01, 10, and 11. In this way, the first identifier 00 corresponds to the second identifier 1, the first identifier 01 corresponds to the second identifier 2, the first identifier 10 corresponds to the second identifier 3, and the first identifier 11 corresponds to the second identifier 4.
   Optionally, the first identifier may further include identification information of the sixth network element. For example, the sixth network element is a TMF, the at least one terminal device includes a terminal device 1 to a terminal device 4, the terminal device 1 and the terminal device 2 correspond to a TMF 1, and the terminal device 3 and the terminal device 4 correspond to a TMF 2. Second identifiers of the terminal device 1 to the terminal device 4 are respectively a second identifier 1, a second identifier 2, a second identifier 3, and a second identifier 4. If the first network element is the TMF 1, the first identifiers assigned by the first network element to the terminal device 1 and the terminal device 2 are respectively an identifier of 0 + TMF 1 and an identifier of 1 + TMF 1. In this way, the identifier of 0 + TMF 1 corresponds to the second identifier 1, and the identifier of 1 + TMF 1 corresponds to the second identifier 2. If the first network element is the TMF 2, the first identifiers assigned by the first network element to the terminal device 3 and the terminal device 4 are respectively an identifier of 0 + TMF 2 and an identifier of 1 + TMF 2. In this way, the identifier of 0 + TMF 2 corresponds to the second identifier 3, and the identifier of 1 + TMF 2 corresponds to the second identifier 4.
2. First information may correspond to the second identifier, and the first information is information determined based on the first identifier and the identification information of the sixth network element. For example, the first information may include only the first identifier and the identification information of the sixth network element, or may further include other information in addition to the first identifier and the identification information of the sixth network element. Specific content of the other information is not limited in this application. The following uses an example in which the sixth network element is a TMF or an AF for description.

For example (which is referred to as an example 2 below), the at least one terminal device includes a terminal device 1 to a terminal device 4, the terminal device 1 and the terminal device 2 correspond to a TMF 1, and the terminal device 3 and the terminal device 4 correspond to a TMF 2. Second identifiers of the terminal device 1 to the terminal device 4 are respectively a second identifier 1, a second identifier 2, a second identifier 3, and a second identifier 4. If the first network element is the TMF 1, the first identifiers assigned by the first network element to the terminal device 1 and the terminal device 2 are respectively 0 and 1. In this way, the first identifier 0 and the identifier of the TMF 1 correspond to the second identifier 1, and the first identifier 1 and the identifier of the TMF 1 correspond to the second identifier 2. If the first network element is the TMF 2, the first identifiers assigned by the first network element to the terminal device 3 and the terminal device 4 are respectively 0 and 1. In this way, the first identifier 0 and the identifier of the TMF 2 correspond to the second identifier 3, and the first identifier 1 and the identifier of the TMF 2 correspond to the second identifier 4.

For another example (which is referred to as an example 3 below), the at least one terminal device includes a terminal device 1 to a terminal device 4, the terminal device 1 and the terminal device 2 correspond to an AF 1, and the terminal device 1 and the terminal device 2 correspond to an AF 2. Second identifiers of the terminal device 1 to the terminal device 4 are respectively a second identifier 1, a second identifier 2, a second identifier 3, and a second identifier 4. The first identifiers assigned by the first network element to the terminal device 1 to the terminal device 4 are respectively 0, 1, 0, and 1. In this way, the first identifier 0 and the identifier of the AF 1 correspond to the second identifier 1, the first identifier 1 and the identifier of the AF 1 correspond to the second identifier 2, the first identifier 0 and the identifier of the AF 2 correspond to the second identifier 3, and the first identifier 1 and the identifier of the AF 2 correspond to the second identifier 4.

According to the method, the length of the first identifier can be reduced.

In addition, after assigning the first identifier to the first terminal device, the first network element may store the correspondence between the first identifier and the second identifier, and/or the first network element sends the correspondence between the first identifier and the second identifier to a fifth network element. The fifth network element may be a UDM or an AAA server.

A5: The first network element sends the first identifier to the first terminal device.

The first identifier may be carried in an existing message, or may be carried in a new message.

According to the implementation 1, the first network element or the second network element may assign, to the first terminal device, the first identifier corresponding to the second identifier (for example, an EPC or an IMSI) of the first terminal device. In this way, in a subsequent inventory process, the first terminal device may perform access by using the first identifier. Because the length of the first identifier is shorter than the length of the second identifier, the method can reduce overheads and duration of transmitting an identifier over an air interface, thereby improving a speed, efficiency, and a success rate of inventory, and reducing power consumption of a terminal device.

Implementation 2: When the first identifier is an identifier that is preconfigured in the first terminal device and that corresponds to the second identifier, the first identifier may be preconfigured in the first terminal device before the first terminal device is delivered from a factory, or may be subsequently written into the first terminal device. The first terminal device may locally obtain the preconfigured first identifier.

In the implementation 2, the correspondence between the first identifier and the second identifier is also preconfigured in one or more of the TMF, the AF, the UDM, or the AAA server.

According to the implementation 2, the first terminal device may include the first identifier corresponding to the second identifier (for example, an EPC or an IMSI) of the first terminal device. In this way, in a subsequent inventory process, the first terminal device may perform access by using the first identifier. Because the length of the first identifier is shorter than the length of the second identifier, the method can reduce overheads and duration of transmitting an identifier over an air interface, thereby improving a speed, efficiency, and a success rate of inventory, and reducing power consumption of a terminal device.

Optionally, in S403, the first terminal device may send the first identifier to the first network element by default when the first identifier exists, or may send the first identifier to the first network element after receiving a fourth indication, where the fourth indication indicates the first terminal device to send the first identifier when the first identifier exists in the first terminal device.

S404: The first network element obtains the second identifier of the first terminal device based on the first identifier.

Optionally, the first network element may obtain the second identifier of the first terminal device in one of the following implementations.

Implementation 1: The first network element obtains the correspondence between the first identifier and the second identifier, and determines, based on the first identifier and the correspondence, the second identifier corresponding to the first identifier.

The first network element may obtain the correspondence between the first identifier and the second identifier in one of the following manners.

Manner 1: The first network element receives the correspondence between the first identifier and the second identifier from a third network element.

The third network element may be a UDM, an AAA server, or the like. For example, the first network element may send a query request to the UDM or the AAA server, where the query request is used to request to obtain the correspondence between the first identifier and the second identifier. Then, the UDM or the AAA server may send a query response to the first network element, where the query response includes the correspondence.

Optionally, after obtaining the correspondence, the first network element may store the correspondence.

Manner 2: The first network element obtains a locally stored correspondence between the first identifier and the second identifier.

The correspondence may be pre-stored in the first network element, or may be locally stored after being obtained from the third network element in the manner 1 when another operation is performed on the first terminal device, or may be locally stored after the first network element assigns the first identifier to the first terminal device by using step A1 to step A5.

In addition, in actual use, the first network element may alternatively first determine whether the correspondence is locally stored. If the first network element locally stores the correspondence, the first network element may obtain the correspondence in the manner 2. If the first network element does not locally store the correspondence, the first network element may obtain the correspondence in the manner 1.

When the first identifier corresponds to the second identifier, the first network element may obtain the second identifier based on the first identifier and the correspondence. For example, for the foregoing example 1, if the first identifier is 00, the first network element may determine that the second identifier of the first terminal device is the second identifier 1.

When the first information determined based on the first identifier and the identification information of the sixth network element corresponds to the second identifier, the first network element may obtain the second identifier based on the first identifier, the identification information of the sixth network element, and the correspondence. For example, for the foregoing example 2, if the first identifier is 0, and the identification information of the TMF is the TMF 1, the first network element may determine that the second identifier of the first terminal device is the second identifier 1. For another example, for the foregoing example 3, if the first identifier is 0, and the identification information of the AF is the AF 2, the first network element may determine that the second identifier of the first terminal device is the second identifier 3.

According to the implementation 1, the first network element may quickly determine the second identifier of the first terminal device based on the first identifier and the correspondence between the first identifier and the second identifier, thereby improving an inventory speed and inventory efficiency.

Implementation 2: The first network element obtains, from the fifth network element, the second identifier determined by the fifth network element based on the first identifier.

The fifth network element may be a UDM, an AAA server, or the like.

In the implementation 2, the first network element may obtain the second identifier by using steps B1 to B3.

B1: The first network element sends the first identifier to the fifth network element.

The first identifier may be carried in an existing message (for example, a query request), or may be carried in a new message.

Optionally, when the first information determined based on the first identifier and the identification information of the sixth network element corresponds to the second identifier, the first network element may further send the identification information of the sixth network element to the fifth network element. The first identifier and the identification information of the sixth network element may be carried in a same message, or may be carried in different messages.

B2: The fifth network element determines the second identifier based on the first identifier and the correspondence between the first identifier and the second identifier.

For a specific process in which the fifth network element determines the second identifier, refer to the implementation 1, but except that the first network element is replaced with the fifth network element. Details are not described herein again.

B3: The fifth network element sends the second identifier to the first network element. Correspondingly, the first network element receives the second identifier from the fifth network element.

The second identifier may be carried in an existing message (for example, a query response), or may be carried in a new message.

Optionally, after receiving the second identifier, the first network element may store the correspondence between the second identifier and the first identifier.

According to the implementation 2, the fifth network element may store the correspondence between the first identifier and the second identifier. In this way, the first network element may obtain the first identifier from the fifth network element. In this implementation, the first identifier of the first terminal device can be shared by a plurality of network elements by using the fifth network element, to support a scenario in which a terminal device is moved in coverage areas of different network elements.

Optionally, when the first network element is a TMF, the TMF may send the second identifier to an AF after obtaining the second identifier. The AF may be an AF sending a second request to the TMF, and the second request is used to request to perform a target operation on one or more terminal devices. When the target operation is an inventory operation, the TMF may send the second identifier to the AF after inventorying the first terminal device, or may send identifiers of the one or more terminal devices to the AF after inventorying the one or more terminal devices. When the target operation is a read operation, a write operation, or the like, the TMF may further perform the read operation or the write operation on the first terminal device after obtaining the second identifier. After performing the read operation or the write operation on the first terminal device, the TMF may send the second identifier and an operation result to the AF; or after performing the read operation or the write operation on the one or more terminal devices, the TMF may send the identifiers of the one or more terminal devices and operation results to the AF.

An embodiment of this application provides a communication method. The method may be applied to the communication system shown in FIG. 1 or FIG. 2. The following describes a procedure of the method in detail with reference to a flowchart shown in FIG. 5.

S501: An AF sends a fourth request to a first network element, where the fourth request is used to request to periodically obtain identifiers of one or more terminal devices.

Correspondingly, the first network element receives the fourth request from the AF.

An identifier of each terminal device includes a first identifier of the terminal device and/or a second identifier of the terminal device. The second identifier of the terminal device is a unique identifier of the terminal device, and the first identifier of the terminal device is an identifier of the terminal device within a service scope of a sixth network element, and may uniquely indicate the terminal device within the service scope of the sixth network element. For specific content of the first identifier and the second identifier, refer to the descriptions of the first identifier and the second identifier in the method shown in FIG. 4. Details are not described herein again.

S502: The first network element sends a third request to an access network device, where the third request may be used to request to obtain the identifiers of the one or more terminal devices in a first periodicity.

The first periodicity may be an N^{th} periodicity during periodic inventory, and N is a positive integer.

Optionally, the third request may include a first indication. The first indication indicates the access network device to obtain an identifier of a next terminal device in the one or more terminal devices when an identifier of a terminal device in the one or more terminal devices is obtained and after a request that is from the first network element and that is used to request to obtain the identifier of the next terminal device in the one or more terminal devices is received in the current periodicity.

Optionally, the third request further includes a fifth indication, and the fifth indication indicates the one or more terminal devices to send the second identifier. The fifth indication may be an existing information element in a message, or may be a new information element. This is not limited in this application.

S503: The access network device sends a third message to the one or more terminal devices, where the third message is used to obtain an identifier of at least one terminal device.

Optionally, the third message further includes the fifth indication.

S504: The first terminal device sends the second identifier of the first terminal device to the first network element.

S505: The first network element assigns, to the first terminal device, the first identifier corresponding to the second identifier.

S506: The first network element sends the first identifier to the first terminal device.

For specific content of S502 to S506, refer to steps A1 to A5, but except that the at least one terminal device is replaced with the one or more terminal devices. Repeated content is not described again.

S507: The first network element obtains an identifier of a next terminal device in the one or more terminal devices, until the first network element obtains identifiers of all terminal devices in the one or more terminal devices or until the first periodicity ends.

The first network element may send an inventory continuation message to the access network device, where the inventory continuation message is used to request the access network device to continue to inventory the next terminal device in the one or more terminal devices. Then, devices such as the access network device and the first network element may operate the next terminal device with reference to the method for operating the first terminal device in S504 to S506.

According to the method, the first network element may assign the first identifier within the service scope of the sixth network element to the one or more terminal devices in the first periodicity.

S508: The first network element sends an inventory result 1 to the AF.

The inventory result 1 may include second identifiers (for example, EPCs) of the one or more terminal devices.

In a possible manner, in first duration after the first periodicity ends, the access network device may broadcast an excitation signal, and the one or more terminal devices within coverage of the access network device may receive the excitation signal. In other words, in the first duration after the first periodicity ends, the access network device continues to or does not stop broadcast the excitation signal.

The first duration is greater than a time interval between two adjacent periodicities. For example, the two adjacent periodicities are a periodicity 1 and a periodicity 2, and the first duration is greater than a time interval between an end moment of the periodicity 1 and a start moment of the periodicity 2. In this way, the one or more terminal devices may remain powered on, so that the first identifier assigned by the first network element to the one or more terminal devices may be stored.

In an example, the access network device may broadcast the excitation signal in the first duration after the first periodicity ends based on a third indication from the first network element. The third indication indicates the access network device to broadcast the excitation signal in the first duration after each periodicity ends. Optionally, the third indication includes indication information of the first duration. The third indication may be carried in the third request in S502, or may be carried in the inventory continuation message in S507, or may be carried in another message. This is not limited in this application.

In another example, the access network device may set the first duration, or the first duration is preset. In this way, in the first duration after the first periodicity ends, the access network device may directly broadcast the excitation signal.

In another possible manner, when the one or more terminal devices do not receive the excitation signal, the one or more terminal devices may remain powered on in the first duration. In this way, even if the access network device does not broadcast the excitation signal after the first periodicity ends, the one or more terminal devices can still store the first identifier assigned by the first network element to the one or more terminal devices.

S509: The first network element sends a first request to the access network device, where the first request may be used to request to obtain the identifiers of the one or more terminal devices in a second periodicity.

For specific content of S509, refer to S401. Repeated content is not described again.

The second periodicity may be a periodicity after the first periodicity. The first periodicity and the second periodicity may be adjacent periodicities, or may be non-adjacent periodicities.

Optionally, the first request further includes a second indication. The second indication indicates the access network device to obtain an identifier of a next terminal device in the one or more terminal devices after an identifier of any one of the one or more terminal devices is received.

Optionally, the first request further includes a fourth indication. The fourth indication indicates the one or more terminal devices to send the first identifier when the first identifier exists in the one or more terminal devices. In other words, the fourth indication indicates the one or more terminal devices to preferentially send the first identifier.

S510: The access network device sends a first message to the one or more terminal devices, where the first message is used to obtain the identifiers of the one or more terminal devices.

For specific content of S510, refer to S402. Details are not described herein again.

S511: The first terminal device sends an identifier of the first terminal device to the access network device.

The identifier of the first terminal device may be carried in an existing message (for example, a registration request), or may be carried in a new message.

Optionally, when the first terminal device includes the first identifier of the first terminal device, the identifier of the first terminal device sent by the first terminal device to the access network device is the first identifier of the first terminal device. When the first terminal device does not include the first identifier of the first terminal device, the identifier of the first terminal device sent by the first terminal device to the access network device is the second identifier of the first terminal device.

S512: The access network device sends the identifier of the first terminal device to the first network element.

The identifier of the first terminal device may be carried in an existing message (for example, a registration request), or may be carried in a new message.

S513: The access network device obtains the identifier of the next terminal device in the one or more terminal devices.

For a manner in which the access network device obtains the identifier of the next terminal device, refer to the manner for obtaining the identifier of the first terminal device in S511. Details are not described herein again.

A sequence of performing S512 and S513 is not limited in this application.

S514: The access network device sends the identifier of the next terminal device to the first network element.

S515: The first network element sends an inventory result 2 to the AF.

The inventory result 2 may include the second identifiers (for example, the EPCs) of the one or more terminal devices.

In a possible manner, in first duration after the second periodicity ends, the access network device may broadcast an excitation signal, and the one or more terminal devices within coverage of the access network device may receive the excitation signal. For specific content of this manner, refer to S508, but except that the first periodicity is replaced with the second periodicity. In this way, the one or more terminal devices may remain powered on, so that the identifier assigned by the first network element to the one or more terminal devices may be stored.

In another possible manner, when the one or more terminal devices do not receive the excitation signal, the one or more terminal devices may remain powered on in the first duration. In this way, even if the access network device does not broadcast the excitation signal after the second periodicity ends, the one or more terminal devices can still store the first identifier assigned by the first network element to the one or more terminal devices.

If a proportion of second identifiers in the identifiers of the one or more terminal devices received by the first network element in the second periodicity is greater than or equal to a first threshold, the first network element sends a fifth request to the access network device. The fifth request is used to request to obtain the identifiers of the one or more terminal devices in a third periodicity, and the fifth request includes the first indication. For a method for obtaining the identifiers of the one or more terminal devices in the third periodicity, refer to steps S503 to S508. Details are not described herein again. In other words, if the proportion of second identifiers in the identifiers of the one or more terminal devices received by the first network element in the second periodicity is greater than or equal to the first threshold, the first network element may obtain the identifiers of the one or more terminal devices in the next periodicity by using the method in S502 to S508.

If the proportion of second identifiers in the identifiers of the one or more terminal devices received by the first network element in the second periodicity is less than the first threshold, the first network element may obtain the identifiers of the one or more terminal devices in the next periodicity by using S509 to S515.

The first threshold may be preset, or may be determined by the first network element, or may be obtained by the first network element from another device (for example, the AF).

According to the method shown in FIG. 5, when inventorying a terminal device, the first network element may assign the first identifier to the terminal device, and send the first identifier to the terminal device. In a subsequent procedure such as inventory, the terminal device may replace the second identifier of the first terminal device with the first identifier for access. After obtaining an identifier of a terminal device, the AN device may trigger a next terminal device to perform random access, so as to quickly inventory the terminal device.

Because the length of the first identifier is shorter than the length of the second identifier, the method can reduce overheads and duration of transmitting an identifier over an air interface, thereby improving a speed, efficiency, and a success rate of inventory, and reducing power consumption of a terminal device.

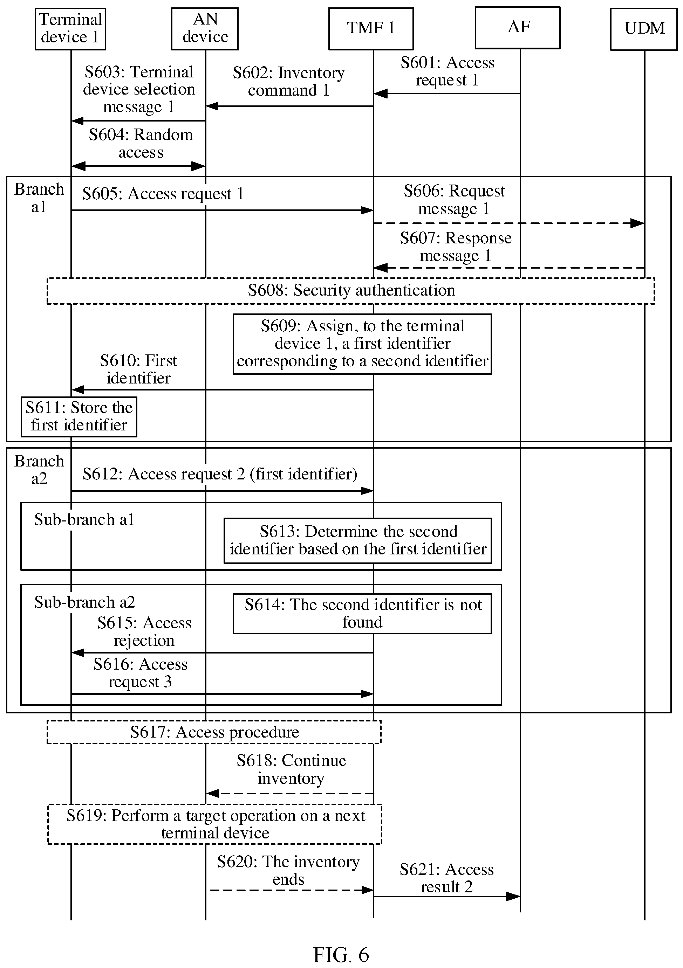

An embodiment of this application provides a communication method. The method is a possible example of the method shown in FIG. 4. Refer to a flowchart shown in FIG. 6. The following describes a procedure of the method in detail by using an example in which a first network element is a TMF 1.

S601: An AF sends an access request 1 to the TMF 1, where the access request 1 is used to request to access at least one terminal device.

Optionally, the access request 1 may be used to request to perform a target operation on the at least one terminal device. The target operation may include at least one of the following: a read operation, a write operation, and an inventory operation. For example, when the target operation is the read operation, the access request 1 may be a read request. For another example, when the target operation is the write operation, the access request 1 may be a write request.

The access request 1 may include indication information of a target area and indication information of a target object.

The target area is one or more areas in which the target operation needs to be performed on a terminal device. The indication information of the target area may be at least one of the following: geographical location information, municipal location information (for example, city A), 3GPP location information (for example, a tracking area (track area, TA) list or a cell (Cell) list), an access network device identifier, and the like. For example, if the indication information of the target area is city A, it indicates that the AF requests to perform the target operation on a terminal device in city A. For another example, if the indication information of the target area is a cell 1 and a cell 2, it indicates that the AF requests to perform the target operation on terminal devices in the cell 1 and the cell 2. For another example, if the indication information of the target area is an access network device 1, it indicates that the AF requests to perform the target operation on a terminal device within coverage of the access network device 1.

The indication information of the target object may be indication information of the at least one terminal device. There may be a plurality of specific forms of the indication information of the terminal device. The following lists several possible forms. Several forms listed below may be used independently or in combination. This is not limited in embodiments of this application.

Form 1: The indication information of the terminal device includes an EPC value interval. For example, if the EPC value interval is 1111000001 to 1111011111, the target object may include a terminal device whose EPC is located in the interval of 1111000001 to 1111011111.

Form 2: The indication information of the terminal device includes an EPC list. For example, if the EPC list includes 1111000001, 1111000010, and 1111000011, the target object may include terminal devices whose EPCs are 1111000001, 1111000010, and 1111000011.

Form 3: The indication information of the terminal device includes the first n bits of an EPC, where n is a positive integer. For example, if the EPC of the terminal device has 10 bits, and the first four bits are 1111, the target object may include terminal devices whose EPCs are 1111000000 to 1111111111.

Form 4: The indication information of the terminal device may be specified as all terminal devices, or is considered as all terminal devices by default without specification.

Form 5: The indication information of the terminal device may specify a terminal device supporting a specific capability, for example, a terminal device supporting bidirectional security authentication.

Form 6: The indication information of the terminal device may specify a terminal device that belongs to a specified public land mobile network (public land mobile network, PLMN), for example, a PLMN = 46001.

S602: The TMF 1 sends an inventory command 1 to an AN device, where the inventory command 1 is used to request to obtain an identifier of the at least one terminal device, that is, used to request to inventory the at least one terminal device.

The inventory command 1 may include the indication information of the target object.

In some possible manners, the inventory command 1 further includes a fourth indication. The fourth indication indicates the at least one terminal device to send the first identifier when the first identifier exists in the at least one terminal device. In other words, the fourth indication indicates the at least one terminal device to preferentially send the first identifier.

In some other possible manners, the at least one terminal device preferentially sends the first identifier by default. In this case, the inventory command 1 may not include the fourth indication.

S603: The AN device broadcasts a terminal device selection message 1.

The terminal device selection message 1 may include the indication information of the target object.

Optionally, the terminal device selection message 1 further includes the fourth indication.

S604: A terminal device 1 accesses the AN device by using a random access procedure.

The terminal device 1 is a terminal device that is in the target object and that successfully accesses the AN device by using the random access procedure.

After S604, the terminal device 1 may send an identifier of the terminal device 1 to the TMF 1 by using a branch a1 or a branch a2. When the terminal device 1 does not have a first identifier of the terminal device 1, the terminal device may send a second identifier of the terminal device 1 to the TMF by using a branch a1. When the terminal device 1 has the first identifier of the terminal device 1 obtained by using the branch a1, the terminal device may send the first identifier of the terminal device 1 to the TMF by using the branch a2. The following separately describes the branch a1 and the branch a2.

The branch a1 includes S605 to S611.

S605: The terminal device 1 sends an access request 1 to the TMF 1.

The access request 1 may include the second identifier (for example, the EPC) of the terminal device 1.

Optionally, the access request 1 may further include capability information of the terminal device 1, and the capability information may include a capability that the terminal device 1 supports the first identifier. For specific content of the capability information, refer to the description of the capability information in step A4. Details are not described herein again.

Optionally, when the access request 1 does not include the capability information of the terminal device 1, the method further includes S606 and S607.

S606: The TMF 1 sends a request message 1 to a UDM, where the request message 1 is used to request to obtain the capability information of the terminal device 1.

The request message 1 may include the second identifier of the terminal device 1.

S607: The UDM sends a response message 1 to the TMF 1.

The response message 1 is a response to the request message 1. The response message 1 may include the capability information of the terminal device 1.

S608: The terminal device 1 and a network side perform security authentication.

S608 is an optional step. A specific process of the security authentication is not limited in this application.

S609: The TMF 1 assigns, to the terminal device 1, the first identifier corresponding to the second identifier of the terminal device 1, and stores a correspondence between the first identifier and the second identifier of the terminal device 1.

For specific content of S609, refer to step A4. Details are not described herein again.

Optionally, when the TMF 1 has not obtained the capability information of the terminal device 1, the TMF 1 may determine, according to a default policy, whether to assign the first identifier to the terminal device 1. For example, the default policy may include at least one of the following: assigning a first identifier to each terminal device, and assigning a first identifier of a specified length to each terminal device.

The length of the first identifier may be fixed (for example, 32 bits (bit)), or may be variable. When the length of the first identifier is variable, when encoding the first identifier, the TMF 1 may indicate the length of the first identifier in one of the following manners:

Manner a1: The first O bits whose values are a first value (for example, 1) of the first identifier indicate that the length of the first identifier is O bytes, where O is a positive integer.

Manner a2: Values of the first Q bits of the first identifier are used to determine the length of the first identifier, where Q is a positive integer. For example, if Q is 3, and a value of the first three bits of the first identifier is 111, the length of the first identifier is 8 bytes or 8 + x bytes, where x is a positive integer, and a value of x is a specified value.

Manner a3: The first identifier may include U bytes, and a 1^{st} bit of the first U-1 bytes is the second value (for example, 1), where U is a positive integer. In other words, if a value of a 1^{st} bit of each byte of the first identifier is the second value, it indicates that the first identifier further includes a next byte.

S610: The TMF 1 sends the first identifier of the terminal device 1 to the terminal device 1.

In some possible manners, the TMF 1 may send the first identifier of the terminal device 1 to the terminal device 1 by using an access success response.

In some other possible manners, the TMF 1 may send the first identifier of the terminal device 1 to the terminal device 1 in a security authentication procedure or an access procedure for the terminal device 1. In this case, the TMF 1 may not send an access success response to the terminal device 1.

S611: The terminal device 1 stores the first identifier of the terminal device 1.

The terminal device 1 may store the first identifier of the terminal device 1 in one of the following manners:

Manner b1: The terminal device 1 stores the first identifier of the terminal device 1 in a random access memory (random access memory, RAM) of the terminal device 1. In this way, provided that the terminal device 1 is not powered off, the first identifier can be used in subsequent inventory. If the terminal device 1 is powered off, the terminal device 1 loses the first identifier.

Manner b2: The terminal device 1 stores the first identifier of the terminal device 1 in a RAM, which has a special power supply design, of the terminal device 1. The RAM may store the first identifier by using remaining power in duration 1 after the terminal device 1 is powered off, and does not clear, in a subsequent power-on process of the terminal device 1, the first identifier stored in the RAM.

Manner b3: The terminal device 1 stores the first identifier of the terminal device 1 in a persistent memory (for example, an electrically erasable programmable read-only memory (electrically erasable programmable read-only memory, EEPROM)) of the terminal device 1. In this way, the terminal device 1 can still use the first identifier after being powered off and restarted.

Optionally, if the terminal device 1 does not have a capability of supporting the first identifier, the terminal device 1 may ignore the first identifier, and still use the second identifier to perform inventory in a subsequent operation.

The branch a2 includes S612 to S616.

S612: The terminal device 1 sends an access request 2 to the TMF 1.

The access request 2 may include the first identifier of the terminal device 1.

In some possible manners, when the terminal device selection message 1 in S603 includes the fourth indication, the terminal device 1 may determine to preferentially send the first identifier, so that the access request 2 includes the first identifier of the terminal device 1.

In some other possible manners, the terminal device may preferentially send the first identifier by default. In this way, the terminal device 1 may include the first identifier of the terminal device 1 in the access request 2.

Optionally, the access request 2 further includes the capability information of the terminal device 1.

After S612, the method further includes: a sub-branch a1 and a sub-branch a2. The following separately describes the sub-branch a1 and the sub-branch a2.

The sub-branch a1 includes S613.

S613: The TMF 1 determines the second identifier of the terminal device 1 based on the first identifier of the terminal device 1.

The TMF 1 may determine the second identifier of the terminal device 1 based on the first identifier of the terminal device 1 and the locally stored correspondence between the first identifier and the second identifier of the terminal device 1. For specific content of S613, refer to S404. Details are not described herein again.

The sub-branch a2 includes S614 to S616.

S614: The TMF 1 does not find the second identifier of the terminal device 1 based on the first identifier of the terminal device 1.

S615: The TMF 1 sends an access rejection message to the terminal device 1.

The access rejection message includes an identifier indicating that a rejection cause value is invalid.

S616: The terminal device 1 sends an access request 3 to the TMF 1.

The access request 3 includes the second identifier of the terminal device 1.

Optionally, the access request 3 further includes the capability information of the terminal device 1.

In addition, S606 to S611 may be performed after S616.

S617: The TMF 1 performs an access procedure on the terminal device 1.

For example, the TMF 1 performs one or more read operations or write operations on the terminal device 1.

S617 is an optional step. For example, when the access request 1 in S601 is an inventory request, the method shown in FIG. 6 may not include S617.

S618: The TMF 1 sends an inventory continuation message to the AN device, where the inventory continuation message is used to request to obtain an identifier of a next terminal device, that is, used to request to inventory the next terminal device.

S619: Perform the target operation on the next terminal device.

For a process of performing the target operation on the next terminal device, refer to S604 to S617, but except that the terminal device 1 is replaced with the next terminal device. Details are not described herein again.

S620: When the AN device no longer receives feedback information of the terminal device, the AN device sends an inventory end message to the TMF 1, where the inventory end message indicates the AN device to end execution of the target operation.

The feedback information of the terminal device may include at least one of the following: an access result 1 fed back by the terminal device, the first identifier of the terminal device, and the second identifier of the terminal device.

S621: The TMF 1 sends an access result 2 to the AF.

The access result 2 may include an access result 1 fed back by the at least one terminal device and a second identifier of the at least one terminal device. In addition, if the TMF 1 has not received feedback information of any terminal device, the access result 2 may not include an access result 1 fed back by the terminal device and a second identifier of the terminal device.

In the method shown in FIG. 6, S618 to S620 are optional steps. For example, when the at least one terminal device is one terminal device, the method shown in FIG. 6 may not include S618 to S620. For another example, when the TMF 1 determines that the access result 1 of the at least one terminal device has been received, the method shown in FIG. 6 may not include S618 to S620.

In the method shown in FIG. 6, S621 is an optional step. For example, after S617, the TMF 1 sends the access result of the terminal device 1 and the second identifier of the terminal device 1 to the AF. That is, each time the TMF 1 obtains an access result of a terminal device, the TMF 1 may send an access result 1 and a second identifier of the terminal device to the AF. In this case, the method shown in FIG. 6 may not include S621.

Optionally, in the method shown in FIG. 6, the UDM may be replaced with an AAA server or another network element storing terminal device information.

According to the method shown in FIG. 6, when inventorying a terminal device, the TMF may assign the first identifier to the terminal device, and send the first identifier to the terminal device. In a subsequent procedure such as inventory, the terminal device may replace the second identifier with the first identifier for access. Because a length of the first identifier is shorter than a length of the second identifier, the method can reduce overheads and duration of transmitting an identifier over an air interface, thereby improving a speed, efficiency, and a success rate of inventory, and reducing power consumption of a terminal device.

In addition, in the method, an identifier transmitted between devices is the first identifier of the terminal device instead of the second identifier (for example, the EPC) of the terminal device. In this way, even if a third party obtains the first identifier, the third party does not know the corresponding second identifier, thereby improving security of transmitting the second identifier.

In addition, the length of the first identifier in the method may be variable, so that the method can be applicable to a network serving terminal devices of different scales.

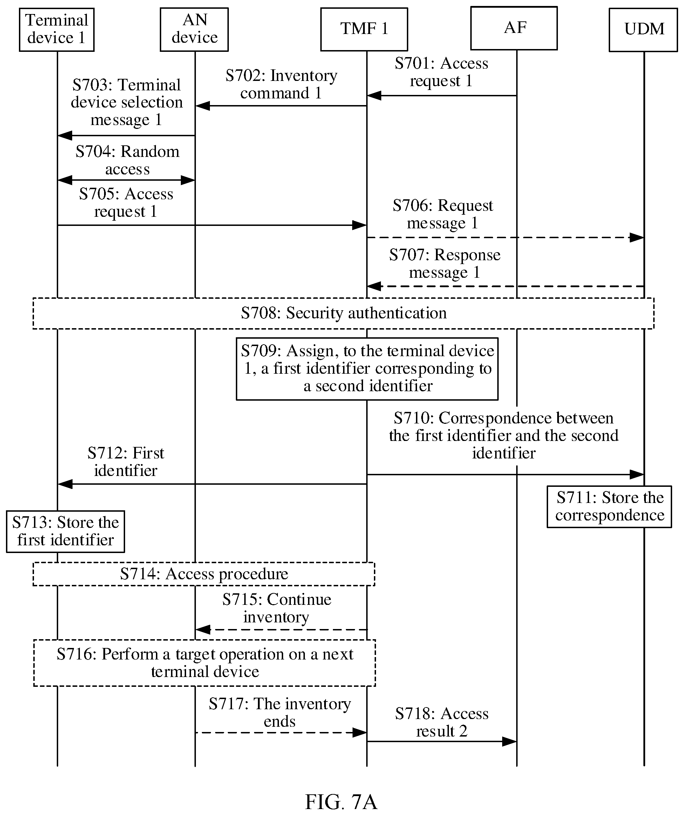

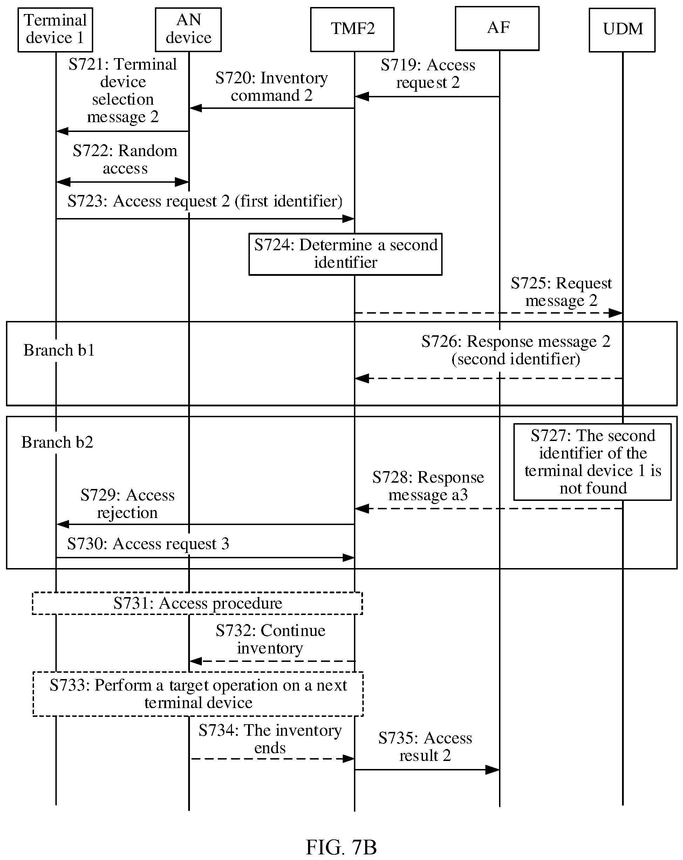

An embodiment of this application provides a communication method. The method is another possible example of the method shown in FIG. 4. Refer to flowcharts shown in FIG. 7A and FIG. 7B. The following describes a procedure of the method in detail by using an example in which a first network element is a TMF 2 and a second network element is a TMF 1.

FIG. 7A shows a procedure in which the TMF 1 assigns a first identifier to a terminal device 1.

S701: An AF sends an access request 1 to the TMF 1, where the access request 1 is used to request to access at least one terminal device.

S702: The TMF 1 sends an inventory command 1 to an AN device, where the inventory command is used to request to obtain an identifier of the at least one terminal device, that is, used to request to inventory the at least one terminal device.

S703: The AN device broadcasts a terminal device selection message 1.

S704: The terminal device 1 accesses the AN device by using a random access procedure.

S705: The terminal device 1 sends an access request 1 to the TMF 1.

The access request 1 may include a second identifier of the terminal device 1.

Optionally, the access request 1 further includes capability information of the terminal device 1.

For specific content of S701 to S705, refer to S601 to S605. Details are not described herein again.

Optionally, when the access request 1 does not include the capability information of the terminal device 1, the method further includes S706 and S707.

S706: The TMF 1 sends a request message 1 to a UDM, where the request message 1 is used to request to obtain the capability information of the terminal device 1.

The request message 1 may include the second identifier of the terminal device 1.

S707: The UDM sends a response message 1 to the TMF 1.

The response message 1 is a response to the request message 1. The response message 1 may include the capability information of the terminal device 1.

S708: The terminal device 1 and a network side perform security authentication.

S708 is an optional step. A specific process of the security authentication is not limited in this application.

S709: The TMF 1 assigns, to the terminal device 1, the first identifier corresponding to the second identifier of the terminal device 1, and stores a correspondence between the first identifier and the second identifier of the terminal device 1.

For specific content of S709, refer to step S609. Details are not described herein again.

S710: The TMF 1 sends the correspondence between the first identifier and the second identifier of the terminal device 1 to the UDM.

For specific content of the correspondence, refer to the description of the correspondence between the first identifier and the second identifier in the method shown in FIG. 4. Details are not described herein again.

Optionally, the TMF 1 may further send the capability information of the terminal device 1 to the UDM.

S711: The UDM stores the correspondence.

Optionally, the UDM may further store the capability information of the terminal device 1.

The UDM may store, in a dynamic memory (for example, a RAM), the information obtained in S710, or may store the information in a non-volatile memory (for example, a hard disk drive).

S712: The TMF 1 sends the first identifier of the terminal device 1 to the terminal device 1.

S713: The terminal device 1 stores the first identifier of the terminal device 1.

For specific content of S712 and S713, refer to S610 and S611. Details are not described herein again.

In addition, an execution sequence of S710 to S711 and S712 to S713 is not limited in this application.

S714: The TMF 1 performs an access procedure on the terminal device 1.

S715: The TMF 1 sends an inventory continuation message to the AN device, where the inventory continuation message is used to request to obtain an identifier of a next terminal device, that is, used to request to inventory the next terminal device.

S716: Perform a target operation on the next terminal device.

For a process of performing the target operation on the next terminal device, refer to S704 to S715, but except that the terminal device 1 is replaced with the next terminal device. Details are not described herein again.

S717: When the AN device no longer receives feedback information of the terminal device, the AN device sends an inventory end message to the TMF 1, where the inventory end message indicates the AN device to end execution of the target operation.

S718: The TMF 1 sends an access result 2 to the AF.

For specific content of S714 to S718, refer to S617 to S621. Details are not described herein again.

Optionally, S709 to S711 are optional steps. For example, in S706, the request message 1 requests to obtain the first identifier of the terminal device 1. In this case, the request message 1 may include the second identifier of the terminal device 1. Optionally, the request message 1 further includes identification information of the AF. In S707, the response message 1 includes the first identifier of the terminal device 1. The first identifier may be stored in the UDM after being assigned by another TMF to the terminal device. In this way, the method shown in FIG. 7A may not include S709 to S711.

After the terminal device 1 obtains the first identifier by using the method shown in FIG. 7A, the TMF 2 may access the terminal device 1 by using the method shown in FIG. 7B.

S719: An AF sends an access request 2 to the TMF 2, where the access request 2 is used to request to access one or more terminal devices.

S720: The TMF 2 sends an inventory command 2 to an AN device, where the inventory command 2 is used to request to obtain identifiers of one or more terminal devices, that is, used to request to inventory the one or more terminal devices.

S721: The AN device broadcasts a terminal device selection message 2.

S722: A terminal device 1 accesses the AN device by using a random access procedure.

The terminal device 1 is a terminal device that is in the terminal devices requested to be inventoried by the inventory command 2 and that successfully accesses the AN device by using the random access procedure.

For specific content of S719 to S722, refer to S601 to S604, but except that the TMF 1 is replaced with the TMF 2, and the at least one terminal device is replaced with the one or more terminal devices. Details are not described herein again.

S723: The terminal device 1 sends an access request 2 to the TMF 2.

The access request 2 may include a first identifier of the terminal device 1.

Optionally, the access request 2 further includes capability information of the terminal device 1.

For specific content of S723, refer to S612, but except that the TMF 1 is replaced with the TMF 2. Details are not described herein again.

S724: The TMF 2 determines whether a correspondence between the first identifier and the second identifier of the terminal device 1 is locally stored; and if the correspondence between the first identifier and the second identifier of the terminal device 1 is locally stored, the TMF 2 determines a second identifier of the terminal device 1 based on the correspondence and the first identifier of the terminal device 1. In this case, the method may not include S725 to S730.

For specific content of S724, refer to S404. Details are not described herein again.

S725: When the TMF 2 has not locally stored the correspondence between the first identifier and the second identifier of the terminal device 1, the TMF 2 sends a request message 2 to a UDM, where the request message 2 is used to request to obtain the second identifier of the terminal device 1.

The request message 2 includes the first identifier of the terminal device 1.

Optionally, when first information determined based on the first identifier of the terminal device 1 and identification information of a sixth network element corresponds to the second identifier of the terminal device 1, the request message 2 further includes the identification information of the sixth network element. For specific content of the sixth network element and the first information, refer to S403. Details are not described herein again.

After S725, the method further includes a branch b1 and a branch b2. The following separately describes the branch b1 and the branch b2.

The branch b1 includes S726.

S726: The UDM sends a response message 2 to the TMF 2.

The response message 2 is a response to the request message 2. The response message 2 may include the second identifier of the terminal device 1.

Optionally, the response message 2 further includes the capability information of the terminal device 1.

After receiving the response message 2, the TMF 2 may store the correspondence between the first identifier and the second identifier of the terminal device 1, and/or the capability information of the terminal device 1.

The branch b2 includes S727 to S730.

S727: The UDM does not find the second identifier of the terminal device 1 based on the first identifier of the terminal device 1.

S728: The UDM sends a response message 3 to the TMF 2.

The response message 3 is a response to the request message 2. The response message 3 is used to notify the TMF 2 that the second identifier of the terminal device 1 is not found.

S729: The TMF 2 sends an access rejection message to the terminal device 1.

The access rejection message includes an identifier indicating that a rejection cause value is invalid.

S730: The terminal device 1 sends an access request 3 to the TMF 2.

The access request 3 includes the second identifier of the terminal device 1.

Optionally, the access request 3 further includes the capability information of the terminal device 1.

After S730, S706 to S713 may be further performed.

S731: The TMF 2 performs an access procedure on the terminal device 1.

S732: The TMF 2 sends an inventory continuation message to the AN device, where the inventory continuation message is used to request to obtain an identifier of a next terminal device, that is, used to request to inventory the next terminal device.

S733: Perform a target operation on the next terminal device.

For a process of performing the target operation on the next terminal device, refer to S722 to S733, but except that the terminal device 1 is replaced with the next terminal device. Details are not described herein again.

S734: When the AN device no longer receives feedback information of the terminal device, the AN device sends an inventory end message to the TMF 2, where the inventory end message indicates the AN device to end execution of the target operation.

S735: The TMF 2 sends an access result 2 to the AF.

For specific content of S731 to S735, refer to S617 to S721, but except that the TMF 1 is replaced with the TMF 2. Details are not described herein again.

Optionally, in the methods shown in FIG. 7A and FIG. 7B, the UDM may be replaced with an AAA server or another network element storing terminal device information.

According to the methods shown in FIG. 7A and FIG. 7B, when inventorying the terminal device, the TMF may assign the first identifier to the terminal device, and store the correspondence between the first identifier and the second identifier of the terminal device in the UDM or the AAA server. In a subsequent procedure such as inventory, the terminal device may replace the second identifier with the first identifier for access, and the TMF may obtain, from the UDM or the AAA server, the second identifier corresponding to the first identifier, so that the first identifier can be shared by a plurality of TMFs by using the UDM or the AAA server, to support a scenario in which the terminal device is moved in coverage areas of different TMFs.

Because a length of the first identifier is shorter than a length of an EPC, the methods can reduce overheads and duration of transmitting an identifier over an air interface, thereby improving a speed, efficiency, and a success rate of inventory, and reducing power consumption of a terminal device.

In addition, in the methods, an identifier transmitted between devices is the first identifier of the terminal device instead of the second identifier (for example, the EPC) of the terminal device. In this way, even if a third party obtains the first identifier, the third party does not know the corresponding second identifier, thereby improving security of transmitting the second identifier.

In addition, the length of the first identifier in the methods may be variable, so that the methods can be applicable to a network serving terminal devices of different scales.

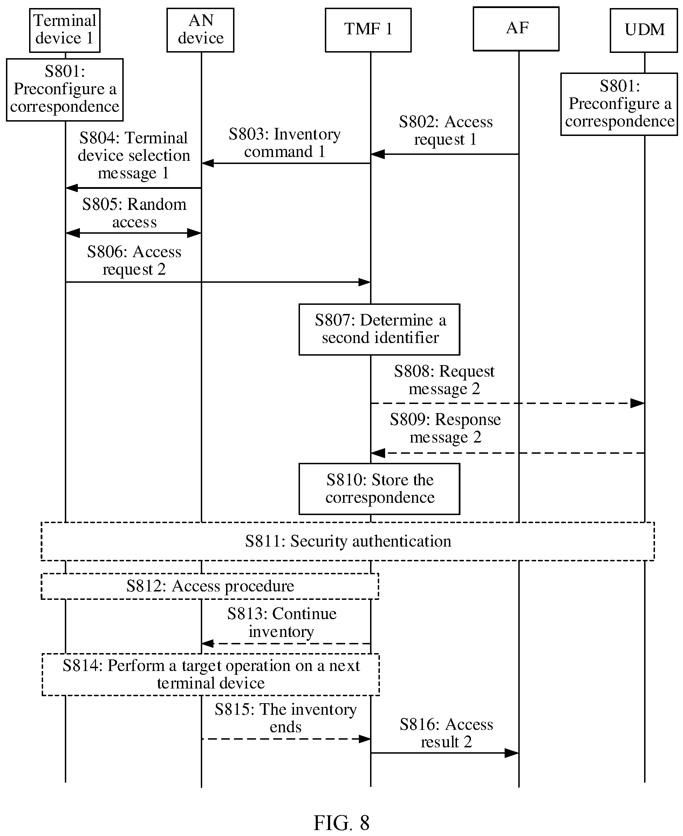

An embodiment of this application provides a communication method. The method is still another possible example of the method shown in FIG. 4. Refer to a flowchart shown in FIG. 8. The following describes a procedure of the method in detail by using an example in which a first network element is a TMF 1.

S801: In a process of initializing at least one terminal device, preconfigure a correspondence between a first identifier and a second identifier of a terminal device in the terminal device and a UDM.

For example, the at least one terminal device includes a terminal device 1, and a correspondence between a first identifier and a second identifier of the terminal device 1 is preconfigured in the terminal device 1 and a UDM.

The correspondence may be stored in a non-volatile memory (for example, a hard disk drive) of the terminal device 1 and the UDM.

For specific content of the correspondence between the first identifier and the second identifier of the terminal device 1, refer to the correspondence between the first identifier and the second identifier in the method shown in FIG. 4. For specific content of the first identifier of the terminal device 1, refer to the description of the first identifier of the terminal device 1 in the method shown in FIG. 6. Details are not described herein again.

S802: An AF sends an access request 1 to the TMF 1, where the access request 1 is used to request to access at least one terminal device.

For specific content of S802, refer to S601. Details are not described herein again.

S803: The TMF 1 sends an inventory command 1 to an AN device, where the inventory command 1 is used to request to obtain an identifier of the at least one terminal device, that is, used to request to inventory the at least one terminal device.

S804: The AN device broadcasts a terminal device selection message 1.

For specific content of S803 and S804, refer to S602 and S603. Repeated content is not described again.

Optionally, the inventory command 1 and the terminal device selection message 1 further include a first indication. For specific content of the first indication, refer to S502. Details are not described herein again.

S805: The terminal device 1 accesses the AN device by using a random access procedure.

The terminal device 1 is a terminal device that is in terminal devices requested to be inventoried by the inventory command 1 and that successfully accesses the AN device by using the random access procedure.

S806: The terminal device 1 sends an access request 2 to the TMF 1.

The access request 2 may include the first identifier of the terminal device 1.

For specific content of S806, refer to S612. Details are not described herein again.

S807: The TMF 1 determines whether a correspondence between the first identifier and the second identifier of the terminal device 1 is locally stored; and if the correspondence between the first identifier and the second identifier of the terminal device 1 is locally stored, the TMF 1 determines the second identifier of the terminal device 1 based on the correspondence and the first identifier of the terminal device 1. In this case, S808 and S809 are optional steps.

S808: When the TMF 1 has not locally stored the correspondence between the first identifier and the second identifier of the terminal device 1, the TMF 1 sends a request message 2 to the UDM, where the request message 2 is used to request to obtain the second identifier of the terminal device 1.

S809: The UDM sends a response message 2 to the TMF 1.

The response message 2 is a response to the request message 2. The response message 2 may include the second identifier of the terminal device 1.

For specific content of S807 to S809, refer to S724 to S726, but except that the TMF 2 is replaced with the TMF 1. Details are not described herein again.

S810: The TMF 1 stores the correspondence between the first identifier and the second identifier of the terminal device 1.

S811: The terminal device 1 and a network side perform security authentication.

A specific process of the security authentication is not limited in this application.

S810 and S811 are optional steps.

S812: The TMF 1 performs an access procedure on the terminal device 1.

S813: The TMF 1 sends an inventory continuation message to the AN device, where the inventory continuation message is used to request to obtain an identifier of a next terminal device, that is, used to request to inventory the next terminal device.

S814: Perform a target operation on the next terminal device.

For a process of performing the target operation on the next terminal device, refer to S804 to S813, but except that the terminal device 1 is replaced with the next terminal device. Details are not described herein again.

S815: When the AN device no longer receives feedback information of the terminal device, the AN device sends an inventory end message to the TMF 1, where the inventory end message indicates the AN device to end execution of the target operation.

The feedback information of the terminal device may include at least one of the following: an access result 1 fed back by the terminal device and the first identifier of the terminal device.

S816: The TMF 1 sends an access result 2 to the AF.

For specific content of S812 to S816, refer to S617 to S621. Repeated content is not described again.

Optionally, in the method shown in FIG. 8, the UDM may be replaced with an AAA server or another network element storing terminal device information.

According to the method shown in FIG. 8, the terminal device and the UDM/AAA server may store the correspondence between the first identifier and the second identifier of the terminal device. In this way, when the terminal device is inventoried, the terminal device may replace the second identifier with the first identifier for access, and the TMF may obtain, from the UDM or the AAA server, the second identifier corresponding to the first identifier. Because a length of the first identifier is shorter than a length of the second identifier, the method can reduce overheads and duration of transmitting an identifier over an air interface, thereby improving a speed, efficiency, and a success rate of inventory, and reducing power consumption of a terminal device.

In addition, in the method, an identifier transmitted between devices is the first identifier of the terminal device instead of the second identifier (for example, an EPC) of the terminal device. In this way, even if a third party obtains the first identifier, the third party does not know the corresponding second identifier, thereby improving security of transmitting the second identifier.

In addition, the length of the first identifier in the method may be variable, so that the method can be applicable to a network serving terminal devices of different scales.

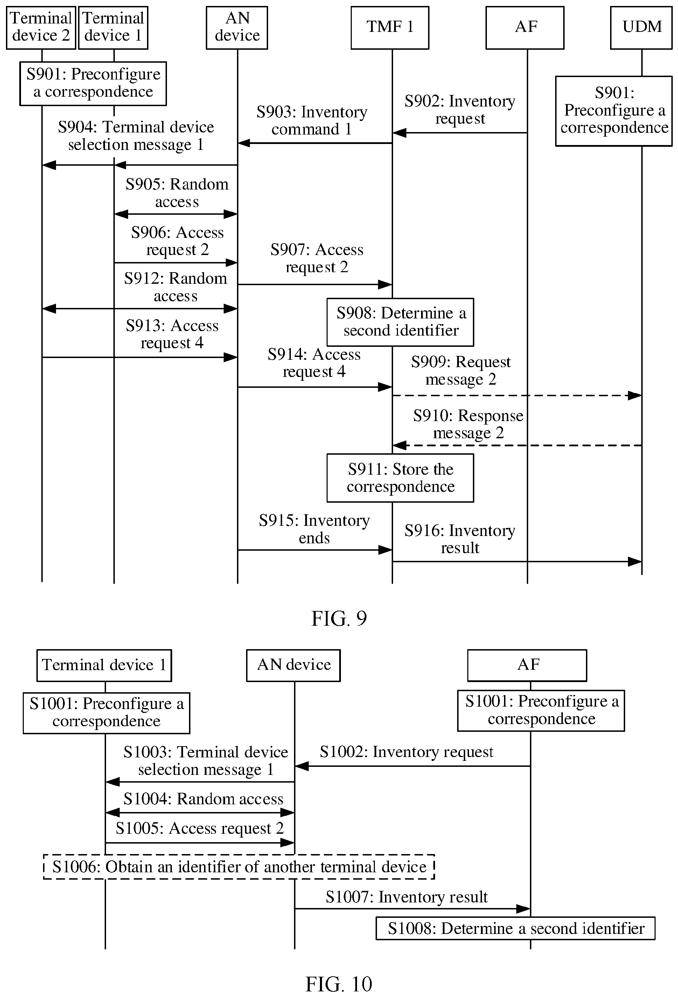

An embodiment of this application provides a communication method. The method is yet another possible example of the method shown in FIG. 4. Refer to a flowchart shown in FIG. 9. The following describes a procedure of the method in detail by using an example in which a first network element is a TMF 1.

S901: In a process of initializing at least one terminal device, preconfigure a correspondence between a first identifier and a second identifier of the terminal device in the terminal device and a UDM.

The at least one terminal device may include a terminal device 1 and a terminal device 2.

For specific content of S901, refer to S801. Details are not described herein again.

S902: An AF sends an inventory request to the TMF 1, where the inventory request is used to request to obtain an identifier of the at least one terminal device.

The inventory request may include indication information of a target area and indication information of a target object. For specific content of the indication information of the target area and the indication information of the target object, refer to S601. Details are not described herein again.

S903: The TMF 1 sends an inventory command 1 to an AN device, where the inventory command 1 is used to request to obtain the identifier of the at least one terminal device, that is, used to request to inventory the at least one terminal device.

S904: The AN device broadcasts a terminal device selection message 1.

For specific content of S903 and S904, refer to S602 and S603. Repeated content is not described again.

Optionally, the inventory command 1 and the terminal device selection message 1 further include a second indication. For specific content of the second indication, refer to S509. Details are not described herein again.

S905: The terminal device 1 accesses the AN device by using a random access procedure.

The terminal device 1 is a terminal device that is in terminal devices requested to be inventoried by the inventory command 1 and that successfully accesses the AN device by using the random access procedure.

S906: The terminal device 1 sends an access request 2 to the AN device.

For specific content of the access request 2, refer to the description of the access request 2 in S806. Details are not described herein again.

S907: The AN device sends the access request 2 to the TMF 1.

S908: The TMF 1 determines whether a correspondence between the first identifier and the second identifier of the terminal device 1 is locally stored; and if the correspondence between the first identifier and the second identifier of the terminal device 1 is locally stored, the TMF 1 determines the second identifier of the terminal device 1 based on the correspondence and the first identifier of the terminal device 1. In this case, S909 and S910 are optional steps.

S909: When the TMF 1 has not locally stored the correspondence between the first identifier and the second identifier of the terminal device 1, the TMF 1 sends a request message 2 to the UDM, where the request message 2 is used to request to obtain the second identifier of the terminal device 1.

S910: The UDM sends a response message 2 to the TMF 1.

The response message 2 is a response to the request message 2. The response message 2 may include the second identifier of the terminal device 1.

For specific content of S908 to S910, refer to S724 to S726, but except that the TMF 2 is replaced with the TMF 1. Details are not described herein again.

S911: The TMF 1 stores the correspondence between the first identifier and the second identifier of the terminal device 1.

S911 is an optional step.

S912: The terminal device 2 accesses the AN device by using the random access procedure.

The terminal device 2 is a terminal device that is in terminal devices requested to be inventoried by the inventory command 1 and that successfully accesses the AN device by using the random access procedure.

S913: The terminal device 2 sends an access request 4 to the AN device.

The access request 4 may include a first identifier of the terminal device 2.

S914: The AN device sends the access request 4 to the TMF 1.

Then, a device such as the TMF 1 may perform, on the terminal device 2, an operation the same as that performed on the terminal device 1 in S908 to S911. Details are not described herein again.

A sequence of performing S907 to S911 and S912 to S914 is not limited in this application.

S915: When the AN device no longer receives feedback information of the terminal device, the AN device sends an inventory end message to the TMF 1, where the inventory end message indicates the AN device to end execution of the target operation.

The feedback information of the terminal device may include the first identifier of the terminal device.

S916: The TMF 1 sends an inventory result to the AF.

The inventory result may include a second identifier of the at least one terminal device. In addition, if the TMF 1 has not received feedback information of any terminal device, the inventory result may not include a second identifier of any terminal device.

For specific content of S915 and S916, refer to S620 and S621. Details are not described herein again.

Optionally, in the method shown in FIG. 9, the UDM may be replaced with an AAA server or another network element storing terminal device information.

According to the method shown in FIG. 9, the terminal device and the UDM/AAA server may store the correspondence between the first identifier and the second identifier of the terminal device. In this way, when the terminal device is inventoried, the terminal device may replace the second identifier with the first identifier for access, and the TMF may obtain, from the UDM or the AAA server, the second identifier corresponding to the first identifier. Because a length of the first identifier is shorter than a length of the second identifier, the method can reduce overheads and duration of transmitting an identifier over an air interface, thereby improving a speed, efficiency, and a success rate of inventory, and reducing power consumption of a terminal device.

In addition, in the method, an identifier transmitted between devices is the first identifier of the terminal device instead of the second identifier (for example, the EPC) of the terminal device. In this way, even if a third party obtains the first identifier, the third party does not know the corresponding second identifier, thereby improving security of transmitting the second identifier.

In addition, the length of the first identifier in the method may be variable, so that the method can be applicable to a network serving terminal devices of different scales.

An embodiment of this application provides a communication method. The method is still another possible example of the method shown in FIG. 4. Refer to a flowchart shown in FIG. 10. The following describes a procedure of the method in detail by using an example in which a first network element is an AF.

S1001: In a process of initializing a terminal device 1, preconfigure a correspondence between a first identifier and a second identifier of the terminal device 1 in the terminal device 1 and an AF.

The correspondence may be stored in a non-volatile memory (for example, a hard disk drive) of the terminal device 1 and the AF.

For specific content of the correspondence between the first identifier and the second identifier of the terminal device 1, refer to the correspondence between the first identifier and the second identifier in the method shown in FIG. 4. For specific content of the first identifier of the terminal device 1, refer to the description of the first identifier of the terminal device 1 in the method shown in FIG. 6. Details are not described herein again.

S1002: The AF sends an inventory request to an AN device, where the inventory request is used to request to obtain an identifier of at least one terminal device.

For specific content of the inventory request, refer to S902. Repeated content is not described again.

Optionally, the inventory request further includes a fourth indication. For specific content of the fourth indication, refer to S602. Details are not described herein again.

S1003: The AN device broadcasts a terminal device selection message 1.

For specific content of S1003, refer to S603. Repeated content is not described again.

Optionally, the terminal device selection message 1 further includes the fourth indication.

S1004: The terminal device 1 accesses the AN device by using a random access procedure.

The terminal device 1 is a terminal device that is in the at least one terminal device and that successfully accesses the AN device by using the random access procedure.

S1005: The terminal device 1 sends an access request 2 to the AN device.

The access request 2 may include the first identifier of the terminal device 1.

In some possible manners, when the terminal device selection message 1 includes the fourth indication, the terminal device 1 may determine to preferentially send the first identifier, so that the access request 2 includes the first identifier of the terminal device 1.

In some other possible manners, the terminal device may preferentially send the first identifier by default. In this way, the terminal device 1 may include the first identifier of the terminal device 1 in the access request 2.

S1006: The AN device obtains an identifier of another terminal device other than the terminal device 1 in the at least one terminal device. For an obtaining manner, refer to S1004 and S1005. Details are not described herein again.

S1007: When the AN device no longer receives feedback information of the terminal device, the AN device sends an inventory result to the AF.

The inventory result may include a first identifier of the at least one terminal device.

S1008: The AF determines a second identifier of the at least one terminal device based on the first identifier of the at least one terminal device.

For specific content of S1008, refer to S404. Details are not described herein again.

According to the method shown in FIG. 10, the terminal device and the AF may store the correspondence between the first identifier and the second identifier of the terminal device. In this way, when the terminal device is inventoried, the terminal device may replace the second identifier with the first identifier for access, and the AF may obtain the second identifier corresponding to the first identifier. Because a length of the first identifier is shorter than a length of the second identifier, the method can reduce overheads and duration of transmitting an identifier over an air interface, thereby improving a speed, efficiency, and a success rate of inventory, and reducing power consumption of a terminal device.

In addition, in the method, an identifier transmitted between devices is the first identifier of the terminal device instead of the second identifier (for example, the EPC) of the terminal device. In this way, even if a third party obtains the first identifier, the third party does not know the corresponding second identifier, thereby improving security of transmitting the second identifier.

In addition, the length of the first identifier in the method may be variable, so that the method can be applicable to a network serving terminal devices of different scales.

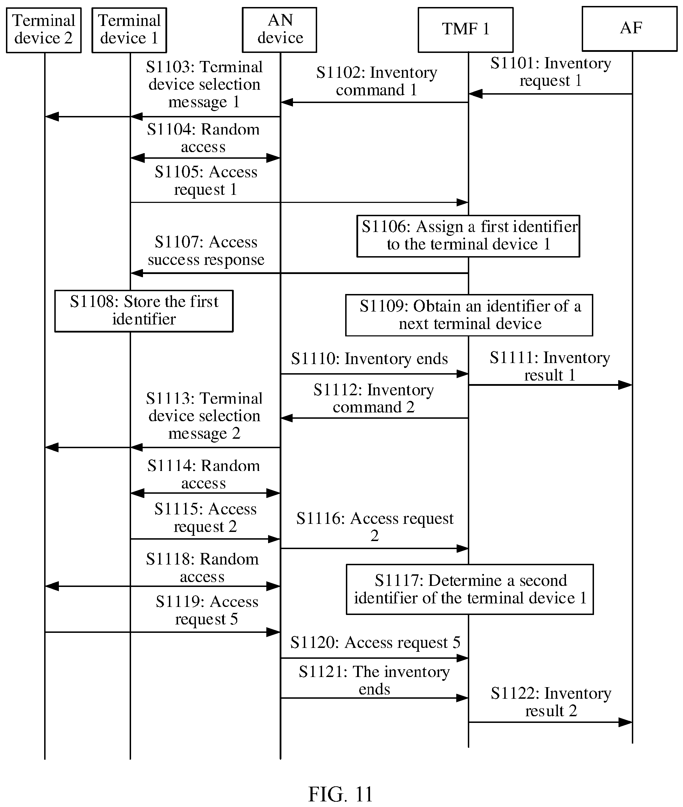

An embodiment of this application provides a communication method. The method is a possible example of the method shown in FIG. 5. Refer to a flowchart shown in FIG. 11. The following describes a procedure of the method in detail by using an example in which a first network element is a TMF 1.

S1101: An AF sends an inventory request 1 to the TMF 1, where the inventory request 1 is used to periodically inventory one or more terminal devices, that is, periodically obtain identifiers of the one or more terminal devices.

The inventory request 1 may include indication information of a target area and indication information of a target object. For specific content of the indication information of the target area and the indication information of the target object, refer to S601. Details are not described herein again.

Optionally, the inventory request 1 may further include at least one of the following: an inventory periodicity, inventory duration, and an inventory quantity. In this way, the AF may request the TMF 1 to perform continuous periodic inventory, or may request the TMF 1 to perform periodic inventory within specified duration, or may request the TMF 1 to perform periodic inventory for a specified quantity of times, or may request the TMF 1 to perform infinite periodic inventory.

S1102: The TMF 1 sends an inventory command 1 to an AN device, where the inventory command 1 is used to request to obtain the identifiers of the one or more terminal devices in a periodicity 1.

S1103: The AN device broadcasts a terminal device selection message 1.

For specific content of S1102 and S1103, refer to S602 and S603. Repeated content is not described again.

In addition, the inventory command 1 and the terminal device selection message 1 further include a first indication. For specific content of the first indication, refer to S502. Details are not described herein again.

S1104: The terminal device 1 accesses the AN device by using a random access procedure.

The terminal device 1 is a terminal device that is in terminal devices requested to be inventoried by the inventory command 1 and that successfully accesses the AN device by using the random access procedure.

S1105: The terminal device 1 sends an access request 1 to the TMF 1.

The access request 1 may include a second identifier of the terminal device 1.

For specific content of S1105, refer to S605. Details are not described herein again.

S1106: The TMF 1 assigns the first identifier to the terminal device 1 supporting the first identifier, and stores a correspondence between the first identifier and the second identifier of the terminal device 1.

For specific content of S1106, refer to S609. Details are not described herein again.

S1107: The TMF 1 sends an access success response to the terminal device 1.

The access success response may include the first identifier of the terminal device 1.

S1108: The terminal device 1 stores the first identifier of the terminal device 1.

For specific content of S1108, refer to S611. Details are not described herein again.

S1109: The TMF 1 obtains an identifier of a next terminal device in the one or more terminal devices, until the TMF 1 obtains identifiers of all terminal devices in the one or more terminal devices or until the periodicity 1 ends.

The TMF 1 may send an inventory continuation message to the AN device, where the inventory continuation message is used to request to obtain the identifier of the next terminal device, that is, used to request to inventory the next terminal device. Then, devices such as the AN device and the TMF 1 may operate the next terminal device with reference to the method for operating the terminal device 1 in S1104 to S1108.

S1110: When the AN device no longer receives feedback information of the terminal device, the AN device sends an inventory end message to the TMF 1, where the inventory end message indicates the AN device to end execution of a target operation.

The feedback information of the terminal device may include at least one of the following: the first identifier of the terminal device and the second identifier of the terminal device.

S1111: The TMF 1 sends an inventory result 1 to the AF.

The inventory result 1 may include second identifiers of the one or more terminal devices. In addition, if the TMF 1 has not received feedback information of any terminal device, the inventory result 1 may not include a second identifier of any terminal device.

For specific content of S1110 and S1111, refer to S620 and S621. Details are not described herein again.

In a possible manner, in duration a (for example, 1 second) after inventory ends, the AN device may broadcast an excitation signal, and one or more terminal devices within coverage of the AN device may receive the excitation signal. For specific content of this manner, refer to S508, but except that the first periodicity is replaced with the periodicity 1. Repeated content is not described again.

The duration a may be the first duration in S508. The duration a may be set by the AN device, or may be obtained by the AN device from the TMF 1 (for example, the duration a is included in the inventory command 1).

In this way, the one or more terminal devices may remain powered on, to ensure that the first identifier is not lost.

In another possible manner, when the one or more terminal devices do not receive the excitation signal, the one or more terminal devices may remain powered on in the first duration. For example, a memory area storing the first identifier in the terminal device may still be powered by a power supply after a power failure. In this way, even if the AN device does not broadcast the excitation signal after the periodicity 1 ends, the terminal device can still store the first identifier in the duration a after being powered off.

S1112: The TMF 1 sends an inventory command 2 to the AN device, where the inventory command 2 is used to request to obtain the identifiers of the one or more terminal devices in a periodicity 2.

S1113: The AN device broadcasts a terminal device selection message 2.

For specific content of S1112 and S1113, refer to S602 and S603. Repeated content is not described again.

In addition, the inventory command 2 and the terminal device selection message 2 further include a second indication. For specific content of the second indication, refer to S509. Details are not described herein again.

S1114: The terminal device 1 accesses the AN device by using a random access procedure.

The terminal device 1 is a terminal device that is in the terminal devices requested to be inventoried by the inventory command 2 and that successfully accesses the AN device by using the random access procedure.

S1115: The terminal device 1 sends an access request 2 to the AN device.

The access request 2 may include an identifier of the terminal device 1. When the terminal device 1 includes the first identifier of the terminal device 1, the access request 2 includes the first identifier of the terminal device 1. When the terminal device 1 does not include the first identifier of the terminal device 1, the access request 2 includes the second identifier of the terminal device 1. In other words, the terminal device 1 may preferentially send the first identifier. The following describes a manner in which the terminal device 1 determines to preferentially send the first identifier.

In some possible manners, when the terminal device selection message 1 includes the fourth indication, the terminal device 1 may determine to preferentially send the first identifier, so that the access request 2 includes the first identifier of the terminal device 1.

In some other possible manners, the terminal device may preferentially send the first identifier by default. In this way, the terminal device 1 may include the first identifier of the terminal device 1 in the access request 2.

S1116: The AN device sends the access request 2 to the TMF 1.

S1117: The TMF 1 determines the second identifier of the terminal device 1.

When the access request 2 includes the first identifier of the terminal device 1, the TMF 1 may determine a second identifier of a terminal device 2 based on the first identifier of the terminal device 1. For specific content of the determining, refer to S404. Details are not described herein again.

S1118: The terminal device 2 accesses the AN device by using a random access procedure.

The terminal device 2 is a terminal device that is in the terminal devices requested to be inventoried by the inventory command 2 and that successfully accesses the AN device by using the random access procedure.

Optionally, S1118 may be performed after S1115.

S1119: The terminal device 2 sends an access request 5 to the AN device.

For specific content of S1119, refer to S1115, except that the terminal device 1 is replaced with the terminal device 2, and the access request 2 is replaced with the access request 5. Details are not described herein again.

S1120: The AN device sends the access request 5 to the TMF 1.

Then, the TMF 1 may determine the second identifier of the terminal device 2. For a manner in which the TMF 1 determines the second identifier of the terminal device 2, refer to S1117, but except that the terminal device 1 is replaced with the terminal device 2. Details are not described herein again.

S1121: When the AN device no longer receives feedback information of the terminal device, the AN device sends the inventory end message to the TMF 1, where the inventory end message indicates the AN device to end execution of the target operation.

The feedback information of the terminal device may include at least one of the following: the identifier of the terminal device.

S1122: The TMF 1 sends an inventory result 2 to the AF.

The inventory result 2 may include second identifiers of the one or more terminal devices. In addition, if the TMF 1 has not received feedback information of any terminal device, the inventory result 2 may not include a second identifier of any terminal device.

For specific content of S1121 and S1122, refer to S620 and S621. Details are not described herein again.

In a possible manner, in duration a (for example, 1 second) after the periodicity 2 ends, the AN device may broadcast the excitation signal, and one or more terminal devices within coverage of the AN device may receive the excitation signal. For specific content of this manner, refer to S508, but except that the first periodicity is replaced with the periodicity 2. Repeated content is not described again.

In another possible manner, when the one or more terminal devices do not receive the excitation signal, the one or more terminal devices may remain powered on in the first duration. In this way, even if the AN device does not broadcast the excitation signal after the periodicity 2 ends, the one or more terminal devices can still store the first identifier assigned by the TMF 1 to the one or more terminal devices.

Optionally, when a proportion of second identifiers in identifiers of the terminal device that are obtained in a previous periodicity is less than a first threshold, in a next periodicity, the TMF 1 inventories the one or more terminal devices in a manner the same as that in the periodicity 2. When the proportion of second identifiers in the identifiers of the terminal device that are obtained in the previous periodicity is greater than or equal to the first threshold, in the next periodicity, the TMF 1 inventories the one or more terminal devices in a manner the same as that in the periodicity 1.

According to the method shown in FIG. 11, when periodically inventorying a terminal device, in the periodicity 1, the TMF may assign the first identifier to the terminal device, and send the first identifier to the terminal device. In a subsequent periodicity, the terminal device may replace the second identifier with the first identifier for access. Because a length of the first identifier is shorter than a length of the second identifier, the method can reduce overheads and duration of transmitting an identifier over an air interface, thereby improving a speed, efficiency, and a success rate of inventory, and reducing power consumption of a terminal device.

In addition, in the method, an identifier transmitted between devices is the first identifier of the terminal device instead of the second identifier (for example, the EPC) of the terminal device. In this way, even if a third party obtains the first identifier, the third party does not know the corresponding second identifier, thereby improving security of transmitting the second identifier.

In addition, the length of the first identifier in the method may be variable, so that the method can be applicable to a network serving terminal devices of a same scale.

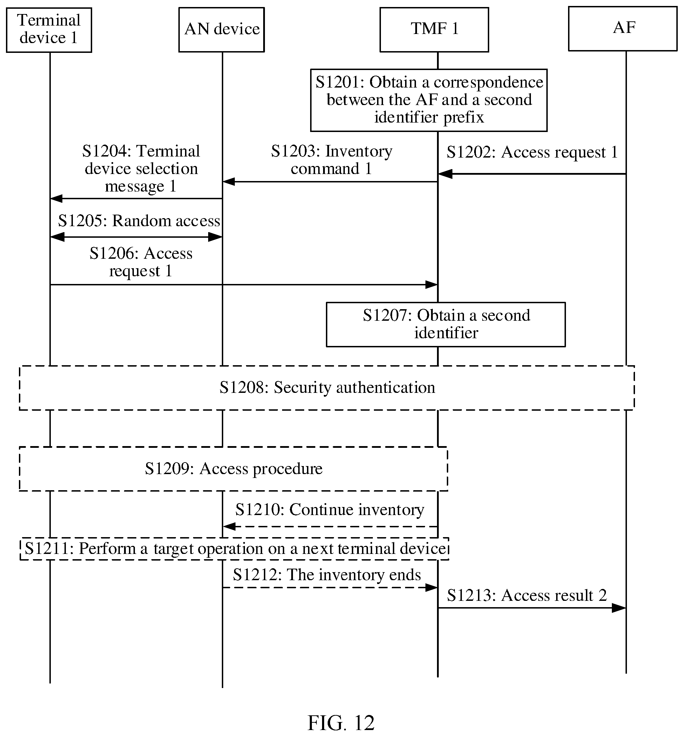

An embodiment of this application provides a communication method. The method may be applied to the communication system shown in FIG. 1 or FIG. 2. The following describes a procedure of the method in detail with reference to a flowchart shown in FIG. 12.

S1201: A TMF 1 obtains a correspondence between an AF and a second identifier prefix (for example, an EPC prefix).

In some possible manners, the correspondence between the AF and the second identifier prefix is preset in a TMF.

In some other possible manners, the TMF may obtain the correspondence between the AF and the second identifier prefix from the AF. For example, the AF may register, with the TMF, the second identifier prefix corresponding to the AF.

The AF may correspond to one second identifier prefix, or may correspond to a plurality of second identifier prefixes.

S1202: The AF sends an access request 1 to the TMF 1, where the access request 1 is used to request to access at least one terminal device.

For specific content of S1202, refer to S601. Details are not described herein again.

S1203: The TMF 1 sends an inventory command 1 to an AN device, where the inventory command 1 is used to request to obtain an identifier of the at least one terminal device, that is, used to request to inventory the at least one terminal device.

For specific content of S1203, refer to S602. Repeated content is not described again.

Optionally, the inventory command 1 further includes a second identifier prefix 1 corresponding to the AF.

In some possible manners, the AF may correspond to one second identifier prefix, and the second identifier prefix 1 may be obtained by the TMF 1 based on the correspondence in S1201.

In some other possible manners, the AF may correspond to a plurality of second identifier prefixes, and the second identifier prefix 1 may be included in the access request 1.

Optionally, the inventory command 1 further includes information indicating a second identifier filtering condition and a sixth indication. The second identifier filtering condition is that the first n bits of a second identifier of a terminal device are the second identifier prefix 1, and n is a positive integer. The sixth indication indicates the terminal device to feed back a truncated second identifier when the second identifier filtering condition is met.

The information indicating the second identifier filtering condition may include at least one of the following:
1. Memory area indication information: indication information indicating a memory area in which the second identifier is located.
2. Indication information of a mask start position: indicating a start position of the second identifier in the memory area, where the mask start position is the start position of the second identifier in the memory area.
3. Indication information of a mask length used by a terminal device: indicating a length of the second identifier prefix 1. Optionally, the mask length is a length of the second identifier prefix 1. For example, if the mask length is n, it indicates that the length of the second identifier prefix 1 is n.
4. A value of a mask used by the terminal device: indicating the second identifier prefix 1. For example, the value of the mask is equal to the second identifier prefix.

S1204: The AN device broadcasts a terminal device selection message 1.

For specific content of S1204, refer to S603. Repeated content is not described again.

The terminal device selection message 1 further includes at least one of the following: the second identifier prefix 1, the information indicating the second identifier filtering condition, and the sixth indication.

S1205: A terminal device 1 accesses the AN device by using a random access procedure.

S1206: The terminal device 1 sends an access request 1 to the TMF 1.

If the terminal device 1 meets the second identifier filtering condition, the access request 1 includes the truncated second identifier of the terminal device 1; or if the terminal device 1 does not meet the second identifier filtering condition, the access request 1 includes the second identifier of the terminal device 1. The terminal device 1 may remove the second identifier prefix 1 from the second identifier of the terminal device 1 to obtain the truncated second identifier.

S1207: If the access request 1 includes the truncated second identifier of the terminal device 1, the TMF 1 may concatenate the second identifier prefix 1 and the truncated second identifier to obtain the second identifier of the terminal device 1.

S1208: The terminal device 1 and a network side perform security authentication.

S1208 is an optional step. A specific process of the security authentication is not limited in this application.

S1209: The TMF 1 performs an access procedure on the terminal device 1.

S1210: The TMF 1 sends an inventory continuation message to the AN device, where the inventory continuation message is used to request to obtain an identifier of a next terminal device, that is, used to request to inventory the next terminal device.

S1211: Perform a target operation on the next terminal device.

For a process of performing the target operation on the next terminal device, refer to S1205 to S1210, but except that the terminal device 1 is replaced with the next terminal device. Details are not described herein again.

S1212: When the AN device no longer receives feedback information of the terminal device, the AN device sends an inventory end message to the TMF 1, where the inventory end message indicates the AN device to end execution of the target operation.

S1213: The TMF 1 sends an access result 2 to the AF.

For specific content of S1209 to S1213, refer to S617 to S621. Details are not described herein again.

S1208 to S1210 are optional steps. For example, if the access request 1 in S1202 is an inventory request, the method may not include S1208 to S1210.

According to the method shown in FIG. 12, when the terminal device is inventoried, the terminal device may report the truncated second identifier, so that overheads and duration of transmitting an identifier over an air interface can be reduced, thereby improving a speed, efficiency, and a success rate of inventory, and reducing power consumption of the terminal device.

In addition, in the method, an identifier transmitted between devices is a part of the second identifier of the terminal device instead of the second identifier (for example, an EPC) of the terminal device. In this way, even if a third party obtains the first identifier, the third party does not know the corresponding second identifier, thereby improving security of transmitting the second identifier.

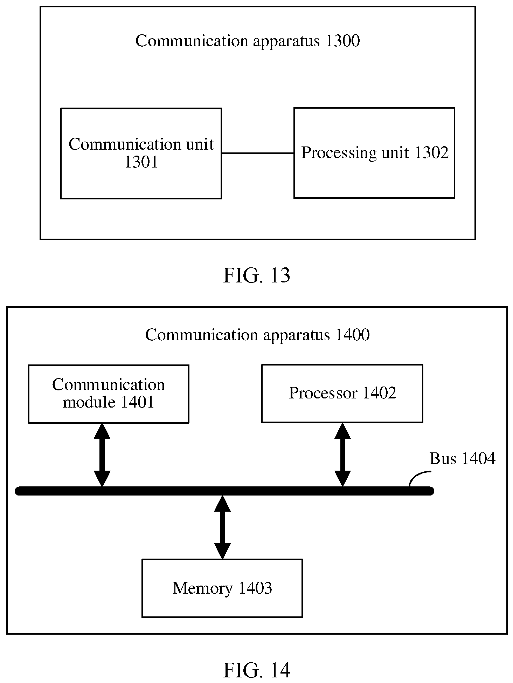

Based on a same technical concept as the method embodiments in FIG. 4 to FIG. 12, an embodiment of this application provides a communication apparatus by using FIG. 12, and the communication apparatus may be configured to perform functions of related steps in the foregoing method embodiments. The functions may be implemented by hardware, or may be implemented by software or by hardware executing corresponding software. The hardware or the software includes one or more modules corresponding to the foregoing functions. A structure of the communication apparatus is shown in FIG. 13, and includes a communication unit 1301 and a processing unit 1302. The communication apparatus 1300 may be used for the terminal device, the AN device, or the AF in the communication system shown in FIG. 1 or FIG. 2; or the communication apparatus 1300 may be used or the TMF in the communication system shown in FIG. 2, and may implement the communication methods provided in the foregoing embodiments and instances of this application. The following describes functions of the units in the communication apparatus 1300.

The communication unit 1301 is configured to receive and send data.

When the communication apparatus 1300 is used for an AF, a TMF, or an AN device (in a scenario in which the AN device interacts with a network element in a core network), the communication unit 1301 may be implemented by using a physical interface, a communication module, a communication interface, or an input/output interface. The communication apparatus 1300 may be connected to a network cable or a cable by using the communication unit, to establish a physical connection to another device.

When the communication apparatus 1300 is used for the terminal device or the AN device (in a scenario in which the AN device interacts with the terminal device), the communication unit 1301 may be implemented by using a transceiver, for example, a mobile communication module. The mobile communication module may include at least one antenna, at least one filter, a switch, a power amplifier, a low noise amplifier (low noise amplifier, LNA), and the like.

The processing unit 1302 may be configured to support the communication apparatus 1300 in performing a processing action in the foregoing method embodiments. The processing unit 1302 may be implemented by a processor. The processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

In an implementation, the communication apparatus 1300 is used for the first network element in the embodiment of this application shown in FIG. 4 or FIG. 5, or used for the TMF 1 in the embodiment of this application shown in FIG. 6, FIG. 8, FIG. 9, or FIG. 11, or used for the TMF 2 in the embodiment of this application shown in FIG. 7B, or used for the AF in the embodiment of this application shown in FIG. 10. The following describes specific functions of the processing unit 1302 in this implementation.

The processing unit 1302 is configured to: send a first request to an access network device by using the communication unit 1301, where the first request is used to request to obtain identifiers of one or more terminal devices; receive the first identifier from a first terminal device by using the communication unit 1301, where the first terminal device is a terminal device in the one or more terminal devices, the first identifier is an identifier that is assigned by the first network element or a second network element to the first terminal device and that corresponds to a second identifier of the first terminal device or is an identifier that is preconfigured in the first terminal device and that corresponds to the second identifier, the second identifier is a unique identifier of the first terminal device, a length of the second identifier is greater than a length of the first identifier, the first identifier is an identifier of the first terminal device within a service scope of a sixth network element, and the sixth network element is a network element providing a service for the first terminal device; and obtain the second identifier of the first terminal device based on the first identifier.

In a first possible manner, the processing unit 1302 is specifically configured to: obtain a correspondence between the first identifier and the second identifier; and determine, based on the first identifier and the correspondence, the second identifier corresponding to the first identifier.

Optionally, when the communication apparatus 1300 is a tag management function network element, before sending the first request to the access network device, the processing unit 1302 is further configured to: receive a second request from an application function network element by using the communication unit 1301, where the second request is used to request to perform a target operation on the one or more terminal devices; and after obtaining the second identifier of the first terminal device, send the second identifier to the application function network element by using the communication unit 1301.

Optionally, the processing unit 1302 is specifically configured to: obtain the locally stored correspondence between the first identifier and the second identifier, or receive the correspondence between the first identifier and the second identifier from a third network element by using the communication unit 1301.

In a possible design, the foregoing correspondence is a correspondence between first information and the second identifier, and the first information is information determined based on the first identifier and identification information of the sixth network element. The processing unit 1302 is specifically configured to determine, based on the first identifier, the identification information of the sixth network element, and the correspondence, the second identifier corresponding to the first identifier.

Optionally, the processing unit 1302 may be configured to assign the second identifier to the first terminal device. Specifically, before sending the first request to the access network device, the processing unit 1302 is configured to: send a third request to the access network device by using the communication unit 1301, where the third request is used to request to obtain an identifier of at least one terminal device, where the at least one terminal device includes the first terminal device; receive the second identifier from the first terminal device by using the communication unit 1301; assign, to the first terminal device, the first identifier corresponding to the second identifier; and send the first identifier to the first terminal device by using the communication unit 1301.

Optionally, before assigning, to the first terminal device, the first identifier corresponding to the second identifier, the processing unit 1302 is further configured to obtain capability information of the first terminal device, where the capability information indicates that the first terminal device has a capability of supporting of the first identifier.

In a possible design, the processing unit 1302 is specifically configured to: receive the capability information from the first terminal device by using the communication unit 1301, or receive the capability information of the first terminal device from a fourth network element by using the communication unit 1301.

Optionally, the processing unit 1302 is specifically configured to: determine a length of the first identifier based on a preset quantity threshold of terminal devices, where the quantity threshold is a quantity threshold of terminal devices within the service scope of the sixth network element; and assign the first identifier to the first terminal device based on the length of the first identifier.

Optionally, after assigning, to the first terminal device, the first identifier corresponding to the second identifier, the processing unit 1302 is further configured to: send the correspondence between the first identifier and the second identifier to a fifth network element by using the communication unit 1301, and/or store the correspondence between the first identifier and the second identifier.

In addition, the terminal apparatus 1300 may be configured to perform post-inventory on the one or more terminal devices. Optionally, before sending the third request to the access network device, the processing unit 1302 is configured to receive a fourth request from the application function network element by using the communication unit 1301. The fourth request is used to request to periodically obtain the identifiers of the one or more terminal devices. The third request is specifically used to request to obtain the identifiers of the one or more terminal devices in a first periodicity. The communication apparatus 1300 assigns an identifier within the service scope of the sixth network element to the one or more terminal devices in the first periodicity. The first request is specifically used to request to obtain the identifiers of the one or more terminal devices in a second periodicity. The communication apparatus 1300 receives the first identifier of the first terminal device in the one or more terminal devices in the second periodicity.

Optionally, if a proportion of unique identifiers in the identifiers of the one or more terminal devices received by the communication apparatus 1300 in the second periodicity is greater than or equal to the first threshold, the processing unit 1302 is further configured to: send a fifth request to the access network device by using the communication unit 1301, where the fifth request is used to request to obtain the identifiers of the one or more terminal devices in a third periodicity. The communication apparatus 1300 assigns the identifier within the service scope of the sixth network element to the one or more terminal devices in the third periodicity.

Optionally, the processing unit 1302 is further configured to send a third indication to the access network device by using the communication unit 1301, where the third indication indicates the access network device to send an excitation signal to the one or more terminal devices in first duration after each periodicity ends.

In a second possible manner, the correspondence between the first identifier and the second identifier is preconfigured in the terminal apparatus 1300.

In a third possible manner, the second identifier may be determined by the fifth network element based on the first identifier. The processing unit 1302 is specifically configured to: send the first identifier to the fifth network element by using the communication unit 1301; and receive, by using the communication unit 1301, the second identifier determined by the fifth network element based on the first identifier.

Optionally, the first information corresponds to the second identifier, and the first information is information determined based on the first identifier and the identification information of the sixth network element. The processing unit 1302 is specifically configured to: send the first identifier and the identification information of the sixth network element to the fifth network element by using the communication unit 1301; and receive, by using the communication unit 1301, the second identifier determined by the fifth network element based on the first identifier and the identification information of the sixth network element.

Optionally, in any one of the foregoing possible manners, before receiving the first identifier from the first terminal device, the processing unit 1302 is further configured to send a fourth indication to the first terminal device by using the communication unit 1301 and the access network device, where the fourth indication indicates the first terminal device to send the first identifier when the first identifier exists in the first terminal device.

In an implementation, the communication apparatus 1300 is used for the first terminal device in the embodiment of this application shown in FIG. 4 or FIG. 5, or is used for the terminal device 1 in the embodiments of this application shown in FIG. 6 to FIG. 11. The following describes specific functions of the processing unit 1302 in this implementation.

The processing unit 1302 is configured to: receive a first message from the access network device by using the communication unit 1301, where the first message is used to request to obtain the identifiers of the one or more terminal devices, and the communication apparatus 1300 belongs to the one or more terminal devices; send the first identifier to the first network element by using the communication unit 1301, where the first identifier is an identifier that is assigned by the first network element or the second network element to the communication apparatus 1300 and that corresponds to the second identifier of the communication apparatus 1300 or is an identifier that is preconfigured in the communication apparatus 1300 and that corresponds to the second identifier; the second identifier is a unique identifier of the communication apparatus 1300, and the length of the second identifier is greater than the length of the first identifier; and the first identifier is an identifier within the service scope of the sixth network element, and the sixth network element is a network element providing a service for the communication apparatus 1300.

In a possible manner, before receiving the first message from the access network device, the processing unit 1302 is further configured to: receive a second message from the access network device by using the communication unit 1301, where the second message is used to request to obtain the identifier of the at least one terminal device, and the at least one terminal device includes the communication apparatus 1300; send the second identifier to the first network element by using the communication unit 1301; and receive the first identifier from the first network element by using the communication unit 1301.

Optionally, before receiving the first identifier from the first network element, the processing unit 1302 is further configured to: send capability information of the communication apparatus 1300 to the first network element by using the communication unit 1301, where the capability information indicates that the communication apparatus 1300 has a capability of supporting the first identifier.

Optionally, before sending the first identifier to the access network device, the processing unit 1302 is further configured to receive a fourth indication by using the communication unit 1301, where the fourth indication indicates the communication apparatus 1300 to send the first identifier when the first identifier exists in the communication apparatus 1300.

In an implementation, the communication apparatus 1300 is used for the AN device in the embodiment of this application shown in any one of FIG. 4 to FIG. 11. The following describes specific functions of the processing unit 1302 in this implementation.

The processing unit 1302 is configured to: receive the first request from the first network element by using the communication unit 1301, where the first request is used to request to obtain the identifiers of the one or more terminal devices; send the first message to the one or more terminal devices by using the communication unit 1301, where the first message is used to obtain the identifiers of the one or more terminal devices; receive the first identifier from the first terminal device by using the communication unit 1301, where the first terminal device belongs to the one or more terminal devices, the first identifier is an identifier that is assigned by the first network element or the second network element to the first terminal device and that corresponds to the second identifier of the first terminal device or is an identifier that is preconfigured in the first terminal device and that corresponds to the second identifier of the first terminal device, the second identifier is a unique identifier of the first terminal device, the length of the second identifier is greater than the length of the first identifier, the first identifier is an identifier of the first terminal device within the service scope of the sixth network element, and the sixth network element is a network element providing a service for the first terminal device; and send the first identifier to the first network element by using the communication unit 1301.

In a possible manner, before receiving the first request from the first network element, the processing unit 1302 is further configured to: receive the third request from the first network element by using the communication unit 1301, where the third request is used to request to obtain the identifier of the at least one terminal device, and the at least one terminal device includes the first terminal device; send the second message to the at least one terminal device by using the communication unit 1301, where the second message is used to request to obtain the identifier of the at least one terminal device; receive the second identifier from the first terminal device by using the communication unit 1301; send the second identifier to the first network element by using the communication unit 1301; receive the first identifier from the first network element by using the communication unit 1301; and send the first identifier to the first terminal device by using the communication unit 1301.

Optionally, when the access network device periodically obtains the identifiers of the one or more terminal devices, the processing unit 1302 is further configured to receive the third indication from the first network element by using the communication unit 1301, where the third indication indicates the access network device to send an excitation signal to the one or more terminal devices in first duration after each periodicity ends.

It should be noted that division into the modules in the foregoing embodiments of this application is an example, is merely logical function division, and may be other division during actual implementation. In addition, functional units in embodiments of this application may be integrated into one processing unit, may exist alone physically, or two or more units may be integrated into one unit. The integrated unit may be implemented in a form of hardware, or may be implemented in a form of a software functional unit.

When implemented in a form of a software functional unit and sold and used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) or a processor (processor) to perform all or some of the steps of the methods described in embodiments of this application. The foregoing storage medium includes any medium that can store program code, such as a USB flash drive, a removable hard disk drive, a read-only memory (Read-Only Memory, ROM), a random access memory (Random Access Memory, RAM), a magnetic disk, or an optical disc.

Based on a same technical concept, an embodiment of this application provides a communication apparatus by using FIG. 14, and the communication apparatus may be configured to perform related steps in the foregoing method embodiments. The communication apparatus may be used for the terminal device, the AN device, or the AF in the communication system shown in FIG. 1 or FIG. 2; or the communication apparatus 1300 may be used for the TMF in the communication system shown in FIG. 2, may implement the communication methods provided in the foregoing embodiments and instances of this application, and has the function of the communication apparatus shown in FIG. 13. Refer to FIG. 14. The communication apparatus 1400 includes a communication module 1401, a processor 1402, and a memory 1403. The communication module 1401, the processor 1402, and the memory 1403 are connected to each other.

Optionally, the communication module 1401, the processor 1402, and the memory 1403 are connected to each other through a bus 1404. The bus 1404 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 14, but this does not indicate that there is only one bus or only one type of bus.

The communication module 1401 is configured to receive and send data to implement communication and interaction with another device. For example, the communication module 1401 may be implemented through a physical interface, a communication module, a communication interface, or an input/output interface.

The processor 1402 may be configured to support the communication apparatus 1400 in performing the processing action in the foregoing method embodiments. When the communication apparatus 1400 is configured to implement the foregoing method embodiments, the processor 1402 may be further configured to implement the function of the processing unit 1302. The processor 1402 may be a CPU, or may be another general-purpose processor, a DSP, an ASIC, an FPGA or another programmable logic device, a transistor logic device, a hardware component, or any combination thereof. The general-purpose processor may be a microprocessor or any regular processor or the like.

In an implementation, the communication apparatus 1400 is used for the first network element in the embodiment of this application shown in FIG. 4 or FIG. 5, or used for the TMF 1 in the embodiment of this application shown in FIG. 6, FIG. 8, FIG. 9, or FIG. 11, or used for the TMF 2 in the embodiment of this application shown in FIG. 7B, or used for the AF in the embodiment of this application shown in FIG. 10. The processor 1402 is specifically configured to: send a first request to an access network device by using the communication module 1401, where the first request is used to request to obtain identifiers of one or more terminal devices; receive the first identifier from a first terminal device by using the communication module 1401, where the first terminal device is a terminal device in the one or more terminal devices, the first identifier is an identifier that is assigned by the first network element or a second network element to the first terminal device and that corresponds to a second identifier of the first terminal device or is an identifier that is preconfigured in the first terminal device and that corresponds to the second identifier, the second identifier is a unique identifier of the first terminal device, a length of the second identifier is greater than a length of the first identifier, the first identifier is an identifier of the first terminal device within a service scope of a sixth network element, and the sixth network element is a network element providing a service for the first terminal device; and obtain the second identifier of the first terminal device based on the first identifier.

In an implementation, the communication apparatus 1400 is used for the first terminal device in the embodiment of this application shown in FIG. 4 or FIG. 5, or is used for the terminal device 1 in the embodiments of this application shown in FIG. 6 to FIG. 11. The processor 1402 is specifically configured to: receive a first message from the access network device by using the communication module 1401, where the first message is used to request to obtain the identifiers of the one or more terminal devices, and the communication apparatus 1400 belongs to the one or more terminal devices; send the first identifier to the first network element by using the communication module 1401, where the first identifier is an identifier that is assigned by the first network element or the second network element to the communication apparatus 1400 and that corresponds to the second identifier of the communication apparatus 1400 or is an identifier that is preconfigured in the communication apparatus 1400 and that corresponds to the second identifier; the second identifier is a unique identifier of the communication apparatus 1400, and the length of the second identifier is greater than the length of the first identifier; and the first identifier is an identifier within the service scope of the sixth network element, and the sixth network element is a network element providing a service for the communication apparatus 1400.

In an implementation, the communication apparatus 1400 is used for the AN device in the embodiment of this application shown in any one of FIG. 4 to FIG. 11. The processor 1402 is specifically configured to: receive the first request from the first network element by using the communication module 1401, where the first request is used to request to obtain the identifiers of the one or more terminal devices; send the first message to the one or more terminal devices by using the communication module 1401, where the first message is used to obtain the identifiers of the one or more terminal devices; receive the first identifier from the first terminal device by using the communication module 1401, where the first terminal device belongs to the one or more terminal devices, the first identifier is an identifier that is assigned by the first network element or the second network element to the first terminal device and that corresponds to the second identifier of the first terminal device or is an identifier that is preconfigured in the first terminal device and that corresponds to the second identifier of the first terminal device, the second identifier is a unique identifier of the first terminal device, the length of the second identifier is greater than the length of the first identifier, the first identifier is an identifier of the first terminal device within the service scope of the sixth network element, and the sixth network element is a network element providing a service for the first terminal device; and send the first identifier to the first network element by using the communication module 1401.

For specific functions of the processor 1402, refer to the descriptions in the communication methods provided in the foregoing embodiments and instances of this application and the specific function descriptions of the communication apparatus 1300 in the embodiment of this application shown in FIG. 13. Details are not described herein again.

The memory 1403 is configured to store program instructions, data, and the like. Specifically, the program instructions may include program code, and the program code includes computer operation instructions. The memory 1403 may include a RAM, or may further include a non-volatile memory (non-volatile memory), for example, at least one magnetic disk memory. The processor 1402 executes the program instructions stored in the memory 1403, and implements the foregoing functions by using the data stored in the memory 1403, to implement the communication methods provided in the foregoing embodiments of this application.

It may be understood that the memory 1403 in FIG. 14 in this application may be a volatile memory or a non-volatile memory, or may include a volatile memory and a non-volatile memory. The non-volatile memory may be a ROM, a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a RAM, and serves as an external cache. Through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

Based on the foregoing embodiments, an embodiment of this application further provides a computer program. When the computer program runs on a computer, the computer is enabled to perform the methods provided in the foregoing embodiments.

Based on the foregoing embodiments, an embodiment of this application further provides a computer-readable storage medium. The computer-readable storage medium stores a computer program. When the computer program is executed by a computer, the computer is enabled to perform the method provided in the foregoing embodiments.

The storage medium may be any usable medium that can be accessed by the computer. The following provides an example but does not impose a limitation: The computer-readable medium may include a RAM, a ROM, an EEPROM, a CD-ROM or another optical disc storage, a disk storage medium or another magnetic storage device, or any other medium that can carry or store expected program code in a form of instructions or a data structure and that can be accessed by a computer.

Based on the foregoing embodiments, an embodiment of this application further provides a chip. The chip is configured to read a computer program stored in a memory, to implement the methods provided in the foregoing embodiments.

Based on the foregoing embodiments, an embodiment of this application provides a chip system. The chip system includes a processor, configured to support a computer apparatus in implementing functions related to devices in the foregoing embodiments. In a possible design, the chip system further includes a memory, and the memory is configured to store a program and data that are necessary for the computer apparatus. The chip system may include a chip, or may include a chip and another discrete component.

In conclusion, embodiments of this application provide a communication method and apparatus. In the method, a first network element sends a first request to an access network device to request to obtain identifiers of one or more terminal devices. The first network element may receive a first identifier from a first terminal device, and obtain a second identifier of the first terminal device based on the first identifier. The first terminal device is a terminal device in the one or more terminal devices. The first identifier is an identifier that is assigned by the first network element or a second network element to the first terminal device and that corresponds to the second identifier or is an identifier that is preconfigured in the first terminal device and that corresponds to the second identifier. The second identifier is a unique identifier of the first terminal device. A length of the second identifier is greater than a length of the first identifier. The first identifier is an identifier of the first terminal device within a service scope of a sixth network element. The sixth network element is a network element providing a service for the first terminal device. According to the method, the first terminal device may perform inventory by using the shorter first identifier, thereby improving efficiency and a speed of inventory.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

A person skilled in the art should be aware that embodiments of this application may be provided as methods, systems, or computer program products. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that each procedure and/or block in the flowcharts and/or the block diagrams and/or a combination of procedures and/or blocks in the flowcharts and/or the block diagrams may be implemented by using computer program instructions. These computer program instructions may be provided to a processor of a general-purpose computer, a dedicated computer, an embedded processor, or another programmable data processing device to produce a machine, so that the instructions executed by a processor of a computer or another programmable data processing device generates an apparatus for implementing a function specified in one or more procedures in a flowchart and/or in one or more blocks in a block diagram.

These computer program instructions may alternatively be stored in a computer-readable memory that can direct the computer or any other programmable data processing device to work in a particular manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art may make various modifications and variations to this application without departing from the scope of this application. This application is intended to cover these modifications and variations of this application provided that they fall within the scope defined by the claims of this application and their equivalent technologies.

## Claims

1. A communication method, comprising:
sending, by a first network element, a first request to an access network device, wherein the first request is used to request to obtain identifiers of one or more terminal devices;
receiving, by the first network element, a first identifier from a first terminal device, wherein the first terminal device is a terminal device in the one or more terminal devices; the first identifier is an identifier that is assigned by the first network element or a second network element to the first terminal device and that corresponds to a second identifier of the first terminal device or is an identifier that is preconfigured in the first terminal device and that corresponds to the second identifier; the second identifier is a unique identifier of the first terminal device, and a length of the second identifier is greater than a length of the first identifier; and the first identifier is an identifier of the first terminal device within a service scope of a sixth network element, and the sixth network element is a network element providing a service for the first terminal device; and
obtaining, by the first network element, the second identifier of the first terminal device based on the first identifier.

2. The method according to claim 1, wherein the obtaining, by the first network element, the second identifier of the first terminal device based on the first identifier comprises:
obtaining, by the first network element, a correspondence between the first identifier and the second identifier;
determining, by the first network element based on the first identifier and the correspondence, the second identifier corresponding to the first identifier.

3. The method according to claim 2, wherein when the first network element is a tag management function network element, before the sending, by a first network element, a first request to an access network device, the method further comprises: receiving, by the first network element, a second request from an application function network element, wherein the second request is used to request to perform a target operation on the one or more terminal devices; and
after the obtaining the second identifier of the first terminal device, the method further comprises: sending, by the first network element, the second identifier to the application function network element.

4. The method according to claim 2 or 3, wherein the obtaining, by the first network element, a correspondence between the first identifier and the second identifier comprises:
obtaining, by the first network element, a locally stored correspondence between the first identifier and the second identifier; or
receiving, by the first network element, the correspondence between the first identifier and the second identifier from a third network element.

5. The method according to any one of claims 2 to 4, wherein the correspondence is a correspondence between first information and the second identifier, and the first information is information determined based on the first identifier and identification information of the sixth network element; and
the determining, by the first network element based on the first identifier and the correspondence, the second identifier corresponding to the first identifier comprises:
determining, by the first network element based on the first identifier, the identification information of the sixth network element, and the correspondence, the second identifier corresponding to the first identifier.

6. The method according to any one of claims 1 to 5, wherein before the sending, by a first network element, a first request to an access network device, the method further comprises:
sending, by the first network element, a third request to the access network device, wherein the third request is used to request to obtain an identifier of the at least one terminal device, and the at least one terminal device comprises the first terminal device;
receiving, by the first network element, the second identifier from the first terminal device;
assigning, by the first network element to the first terminal device, the first identifier corresponding to the second identifier; and
sending, by the first network element, the first identifier to the first terminal device.

7. The method according to claim 6, wherein before the assigning, by the first network element to the first terminal device, the first identifier corresponding to the second identifier, the method further comprises:
obtaining, by the first network element, capability information of the first terminal device, wherein the capability information indicates that the first terminal device has a capability of supporting the first identifier.

8. The method according to claim 7, wherein the obtaining, by the first network element, capability information of the first terminal device comprises:
receiving, by the first network element, the capability information from the first terminal device; or
receiving, by the first network element, the capability information of the first terminal device from a fourth network element.

9. The method according to any one of claims 6 to 8, wherein the assigning, by the first network element to the first terminal device, the first identifier corresponding to the second identifier comprises:
determining, by the first network element, the length of the first identifier based on a preset quantity threshold of terminal devices, wherein the quantity threshold is a quantity threshold of terminal devices within the service scope of the sixth network element; and
assigning, by the first network element, the first identifier to the first terminal device based on the length of the first identifier.

10. The method according to any one of claims 6 to 9, wherein after the assigning, by the first network element to the first terminal device, the first identifier corresponding to the second identifier, the method further comprises:
sending, by the first network element, the correspondence between the first identifier and the second identifier to a fifth network element; and/or
storing, by the first network element, the correspondence between the first identifier and the second identifier.

11. The method according to any one of claims 6 to 10, wherein before the sending, by the first network element, a third request to the access network device, the method further comprises:
receiving, by the first network element, a fourth request from the application function network element, wherein the fourth request is used to request to periodically obtain the identifiers of the one or more terminal devices;
the third request is specifically used to request to obtain the identifiers of the one or more terminal devices in a first periodicity, and the first network element assigns an identifier within the service scope of the sixth network element to the one or more terminal devices in the first periodicity; and
the first request is specifically used to request to obtain the identifiers of the one or more terminal devices in a second periodicity, and the first network element receives the first identifier of the first terminal device in the one or more terminal devices in the second periodicity.

12. The method according to claim 11, wherein
if a proportion of unique identifiers in the identifiers of the one or more terminal devices received by the first network element in the second periodicity is greater than or equal to a first threshold, the first network element sends a fifth request to the access network device, the fifth request is used to request to obtain the identifiers of the one or more terminal devices in a third periodicity, and the first network element assigns the identifier within the service scope of the sixth network element to the one or more terminal devices in the third periodicity.

13. The method according to claim 11 or 12, further comprising:
sending, by the first network element, a third indication to the access network device, wherein the third indication indicates the access network device to send an excitation signal to the one or more terminal devices in first duration after each periodicity ends.

14. The method according to any one of claims 2 to 4, wherein the correspondence between the first identifier and the second identifier is preconfigured in the first network element.

15. The method according to claim 1, wherein the obtaining, by the first network element, the second identifier of the first terminal device based on the first identifier comprises:
sending, by the first network element, the first identifier to a fifth network element; and
receiving, by the first network element, the second identifier determined by the fifth network element based on the first identifier.

16. The method according to claim 15, wherein first information corresponds to the second identifier, and the first information is information determined based on the first identifier and identification information of the sixth network element;
the sending, by the first network element, the first identifier to a fifth network element comprises: sending, by the first network element, the first identifier and the identification information of the sixth network element to the fifth network element; and
the receiving, by the first network element, the second identifier determined by the fifth network element based on the first identifier comprises: receiving, by the first network element, the second identifier determined by the fifth network element based on the first identifier and the identification information of the sixth network element.

17. The method according to any one of claims 1 to 16, wherein before the receiving, by the first network element, a first identifier from a first terminal device, the method further comprises:
sending, by the first network element, a fourth indication to the first terminal device by using the access network device, wherein the fourth indication indicates the first terminal device to send the first identifier when the first identifier exists in the first terminal device.

18. A communication method, comprising:
receiving, by a first terminal device, a first message from an access network device, wherein the first message is used to request to obtain identifiers of one or more terminal devices, and the first terminal device belongs to the one or more terminal devices; and
sending, by the first terminal device, a first identifier to a first network element, wherein the first identifier is an identifier that is assigned by the first network element or a second network element to the first terminal device and that corresponds to a second identifier of the first terminal device or is an identifier that is preconfigured in the first terminal device and that corresponds to the second identifier; the second identifier is a unique identifier of the first terminal device, and a length of the second identifier is greater than a length of the first identifier; and the first identifier is an identifier of the first terminal device within a service scope of a sixth network element, and the sixth network element is a network element providing a service for the first terminal device.

19. The method according to claim 18, wherein before the receiving, by a first terminal device, a first message from an access network device, the method further comprises:
receiving, by the first terminal device, a second message from the access network device, wherein the second message is used to request to obtain an identifier of at least one terminal device, and the at least one terminal device comprises the first terminal device;
sending, by the first terminal device, the second identifier to the first network element; and
receiving, by the first terminal device, the first identifier from the first network element.

20. The method according to claim 19, wherein before the receiving, by the first terminal device, the first identifier from the first network element, the method further comprises:
sending, by the first terminal device, capability information of the first terminal device to the first network element, wherein the capability information indicates that the first terminal device has a capability of supporting the first identifier.

21. The method according to any one of claims 18 to 20, wherein before the sending, by the first terminal device, a first identifier of the first terminal device to the access network device, the method further comprises:
receiving, by the first terminal device, a fourth indication, wherein the fourth indication indicates the first terminal device to send the first identifier when the first identifier exists in the first terminal device.

22. A communication method, comprising:
receiving, by an access network device, a first request from a first network element, wherein the first request is used to request to obtain identifiers of one or more terminal devices;
sending, by the access network device, a first message to the one or more terminal devices, wherein the first message is used to obtain the identifiers of the one or more terminal devices;
receiving, by the access network device, a first identifier from a first terminal device, wherein the first terminal device belongs to the one or more terminal devices; the first identifier is an identifier that is assigned by the first network element or a second network element to the first terminal device and that corresponds to a second identifier of the first terminal device or is an identifier that is preconfigured in the first terminal device and that corresponds to the second identifier of the first terminal device; the second identifier is a unique identifier of the first terminal device, and a length of the second identifier is greater than a length of the first identifier; and the first identifier is an identifier of the first terminal device within a service scope of a sixth network element, and the sixth network element is a network element providing a service for the first terminal device; and
sending, by the access network device, the first identifier to the first network element.

23. The method according to claim 22, wherein before the receiving, by an access network device, a first request from a first network element, the method further comprises:
receiving, by the access network device, a third request from the first network element, wherein the third request is used to request to obtain an identifier of at least one terminal device, and the at least one terminal device comprises the first terminal device;
sending, by the access network device, a second message to the at least one terminal device, wherein the second message is used to request to obtain the identifier of the at least one terminal device;
receiving, by the access network device, the second identifier from the first terminal device;
sending, by the access network device, the second identifier to the first network element;
receiving, by the access network device, the first identifier from the first network element; and
sending, by the access network device, the first identifier to the first terminal device.

24. The method according to claim 22 or 23, wherein when the access network device periodically obtains the identifiers of the one or more terminal devices, the method further comprises:
receiving, by the access network device, a third indication from the first network element, wherein the third indication indicates the access network device to send an excitation signal to the one or more terminal devices in first duration after each periodicity ends.

25. A communication apparatus, comprising:
a communication unit, configured to receive and send data; and
a processing unit, configured to perform the method according to any one of claims 1 to 24 by using the communication unit.

26. A communication system, comprising:
a first network element, configured to implement the method according to any one of claims 1 to 17;
a terminal device, configured to implement the method according to any one of claims 18 to 21; and
an access network device, configured to implement the method according to any one of claims 22 to 24.

27. A computer-readable storage medium, wherein the computer-readable storage medium stores a computer program; and when the computer program runs on a computer, the computer is enabled to perform the method according to any one of claims 1 to 24.

28. A chip, wherein the chip is coupled to a memory, and the chip reads a computer program stored in the memory to perform the method according to any one of claims 1 to 24.
